(19) Europäisches Patentamt
European Patent Office
Office européen des brevets

(11) EP 4 276 125 A1

(12) # EUROPEAN PATENT APPLICATION
published in accordance with Art. 153(4) EPC

(43) Date of publication:
**15.11.2023 Bulletin 2023/46**

(21) Application number: **22878977.2**

(22) Date of filing: **07.10.2022**

(51) International Patent Classification (IPC):
***C08F 265/06*** *(2006.01)* ***C08F 220/28*** *(2006.01)*
***C08F 220/34*** *(2006.01)* ***C08F 2/44*** *(2006.01)*

(52) Cooperative Patent Classification (CPC):
**C08F 2/44; C08F 220/28; C08F 220/34;**
**C08F 265/06;** Y02E 60/10

(86) International application number:
**PCT/KR2022/015199**

(87) International publication number:
**WO 2023/059156 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.10.2021 KR 20210133570**

(71) Applicant: **Lg Chem, Ltd.**
**Seoul 07336 (KR)**

(72) Inventors:
- **KIM, Bethy**
**Daejeon 34122 (KR)**
- **JUNG, Je Sik**
**Daejeon 34122 (KR)**
- **SEO, Sang Hyuk**
**Daejeon 34122 (KR)**
- **HONG, Sung Bum**
**Daejeon 34122 (KR)**
- **LEE, Sol Yi**
**Daejeon 34122 (KR)**

(74) Representative: **Hoffmann Eitle**
**Patent- und Rechtsanwälte PartmbB**
**Arabellastraße 30**
**81925 München (DE)**

(54) ## CURABLE COMPOSITION

(57) The present application provides a curable composition capable of forming a thick film having excellent curing characteristics even at a relatively low temperature and securing an excellent level of thermal conductivity as well as a desired level of appropriate adhesion force while having fast curing characteristics, a battery pack to which the curable composition is applied, and a device comprising the battery pack.

[Figure 1]

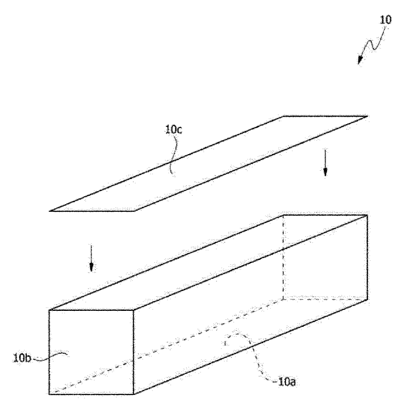


EP 4 276 125 A1

## Description

### Technical Field

Cross-Reference with Related Applications

This application claims the benefit of priority based on Korean Patent Application No. 10-2021-0133570 dated October 8, 2021, the disclosure of which is incorporated herein by reference in its entirety.

Technical Field

The present application relates to a curable composition, a battery pack comprising a cured product of the curable composition, and applications thereof.

### Background Art

As the treatment of heat generated from electric products, electronic products, or batteries such as secondary batteries, becomes an important issue, various heat dissipation countermeasures have been proposed. Among the thermally conductive materials used for heat dissipation countermeasures, resin compositions in which thermally conductive fillers are blended with resins are known.

In order to fix a heating element in which the heating element and a cooling region are in thermal contact with each other while dissipating heat emitted from the heating element, the resin composition may be used. Patent Document 1 (Korean Laid-Open Patent Publication No. 10-2016-0105354) discloses a battery module to which the resin composition is applied.

Among known resins, a silicone resin is a typical resin having excellent heat resistance, and the silicone resin is often used as the heat dissipation countermeasure. However, there is a problem that the application of the silicone resin is limited because adhesion force is low.

In order to secure the adhesion force, a thermally conductive resin composition to which polyurethane is applied is also known. However, the polyurethane has a problem that its own thermal conductivity is poor.

In order to secure the excellent thermal conductivity and excellent adhesion force, a thermally conductive resin composition to which an acrylic resin is applied is known. However, when the thermally conductive resin composition to which the acrylic resin is applied is injected into a battery module and then cured by a thermal curing method for fast curing, it is necessary to maintain a high temperature of about 100°C or more. In this case, thermal damage may occur in components constituting the battery module.

[Prior Art Documents]

(Patent Document 1) Korean Laid-Open Patent Publication No. 10-2016-0105354

### Disclosure

### Technical Problem

The present application is for improving the conventional problems, which is intended to provide a curable composition capable of fast curing at a relatively low temperature compared to the conventional technology.

In addition, the present application is intended to provide a curable composition capable of forming a cured product having an excellent heat dissipation effect, appropriate adhesive performance, and excellent hardness.

Furthermore, the present application is intended to provide a battery pack to which the curable composition is applied, and a device comprising the battery pack.

### Technical Solution

Among the physical properties mentioned in the present application, if the measurement temperature affects a physical property, the relevant physical property is a physical property measured at room temperature, unless otherwise specified.

The term room temperature as used in the present application is a natural temperature without warming or cooling, which may mean, for example, any one temperature within a range of 10°C to 30°C, for example, a temperature of about 15°C or more, about 18°C or more, about 20°C or more, about 23°C or more, about 27°C or less, or 25°C. In

this specification, unless otherwise specified, the unit of temperature is Celsius (°C).

Among the physical properties mentioned in the present application, if the measurement pressure affects a physical property, the relevant physical property is a physical property measured at normal pressure, unless otherwise specified.

The term normal pressure as used in the present application is a natural pressure without pressurization or depressurization, which refers to an atmospheric pressure in a range of about 700 mmHg to 800 mmHg as the normal pressure.

The term 'a to b' as used in the present application means 'within the range between a and b while including a and b'. For example, the fact that includes a to b parts by weight has the same meaning as included in the range of a to b parts by weight.

Among the physical properties mentioned in the present application, if the measurement humidity affects a physical property, the relevant physical property is a physical property measured in an environment with a relative humidity of about 30 to 70% or so, unless otherwise specified.

The term relative humidity as used in the present application is expressed as a percentage (%) of the ratio of the amount of water vapor contained in the current air of a unit volume to the saturated vapor pressure that the air of the unit volume can contain at the maximum, which can be expressed in RH%.

The term weight average molecular weight ($M_w$) as used in the present application may be measured using GPC (Gel permeation chromatography), which can be, specifically, measured according to the following physical property measurement method. In addition, the term polydispersity index (PDI) as used in the present application is a value ($M_w/M_n$) obtained by dividing a weight average molecular weight ($M_w$) by a number average molecular weight ($M_n$), which means a molecular weight distribution of a polymer. The number average molecular weight ($M_n$) may also be measured using GPC (Gel permeation chromatography) if necessary.

The term excellent thermal conductivity as used in the present application may mean that in a state where a curable composition is made into a cured product (sample) having a diameter of 2 cm or more and a thickness of 2 mm, the measured thermal conductivity, as measured along the thickness direction of the sample according to ASTM D5470 standard or ISO 22007- 2 standard, is about 2.0 W/mK or more, 2.1 W/mK or more, 2.2 W/mK or more, 2.3 W/mK or more, 2.4 W/mK or more, 2.5 W/mK or more, 2.6 W/mK or more, 2.7 W/mK or more, 2.8 W/mK or more, 2.9 W/mK or more, or 3.0 W/mK or more or so.

The meaning that a specific material is not substantially included as the term used in the present application is a meaning which does not allow to intentionally comprise the specific material. However, in the case of naturally comprising the specific material, it can be regarded that it is not substantially included if it is included in an amount of 1 wt% or less, 0.5 wt% or less, 0.1 wt% or less, 0.05 wt% or less, or 0.01 wt% or less, relative to the total weight, unless otherwise specified.

The term viscosity as used in the present application may be a value measured at 25°C and 60 rpm, which may be specifically measured according to the following viscosity measurement method.

[Viscosity measurement method]

The viscosity of the curable composition may be measured using a viscometer (manufacturer: Brookfield, model name: Brookfield LV) and a spindle 63 or 64 (selected according to the measurement range of the viscosity), and after performing zero adjustment of the viscometer, the spindle 63 or 64 was mounted on the spindle connection part of the viscometer. A plate was mounted on the plate connection part of the viscometer and adjusted so as to form a certain gap between the spindle and the plate through an adjustment lever. The plate was separated and 0.5 mL or so of a curable composition was applied to the center of the separated plate. The plate applied with the curable composition was mounted again on the plate connection part of the viscometer, and after waiting until the torque value became 0, the viscosity was measured at about 25°C and a rotation speed of 60 rpm.

The term substitution as used in the present application means that a hydrogen atom bonded to a carbon atom of a compound is changed to another substituent, where the position to be substituted is not particularly limited if it is a position in which the hydrogen atom is substituted, that is, a position in which the substituent is substitutable, and when two or more substituents are substituted, the substituents may be the same as or different from each other.

The term substituent as used in the present application means an atom or atomic group that replaces one or more hydrogen atoms on the parent chain of a hydrocarbon. In addition, the substituent is described below, but is not limited thereto, and the substituent may be further substituted with the substituent described below or may not be substituted with any substituent, unless otherwise specified herein.

The term alkyl group or alkylene group as used in the present application may be a linear or branched alkyl group or alkylene group with 1 to 20 carbon atoms, or 1 to 16 carbon atoms, or 1 to 12 carbon atoms, or 1 to 8 carbon atoms, or 1 to 6 carbon atoms, or a cyclic alkyl group or alkylene group with 3 to 20 carbon atoms, or 3 to 16 carbon atoms, or 3 to 12 carbon atoms, or 3 to 8 carbon atoms, or 3 to 6 carbon atoms, unless otherwise described. Here, the

cyclic alkyl group or alkylene group also includes an alkyl group or alkylene group having only a ring structure, and an alkyl group or alkylene group including a ring structure. For example, both a cyclohexyl group and a methyl cyclohexyl group correspond to the cyclic alkyl group. Also, for example, for example, the alkyl group or alkylene group may be exemplified by, specifically, methyl(ene), ethyl(ene), n-propyl(ene), isopropyl(ene), n-butyl(ene), isobutyl(ene), tert-butyl(ene), sec-butyl(ene), 1-methyl-butyl(ene), 1-ethyl-butyl(ene), n-pentyl(ene), isopentyl(ene), neopentyl(ene), tert-pentyl(ene), n-hexyl(ene), 1-methylpentyl(ene), 2-methylpentyl(ene), 4-methyl-2-pentyl(ene), 3,3-dimethylbutyl(ene), 2-ethylbutyl(ene), n-heptyl(ene), 1-methylhexyl(ene), n-octyl(ene), tert-octyl(ene), 1-methylheptyl(ene), 2-ethylhexyl(ene), 2-propylpentyl(ene), n-nonyl(ene), 2,2-dimethylheptyl(ene), 1-ethylpropyl(ene), 1,1-dimethylpropyl(ene), isohexyl(ene), 2-methylpentyl(ene), 4-methylhexyl(ene), 5-methylhexyl(ene), and the like, but is not limited thereto. In addition, the cycloalkyl group or cycloalkylene group may be exemplified by, specifically, cyclopropyl(ene), cyclobutyl(ene), cyclopentyl(ene), 3-methylcyclopentyl(ene), 2,3-dimethylcyclopentyl(ene), cyclohexyl(ene), 3-methylcyclohexyl(ene), 4-methylcyclohexyl(ene), 2,3-dimethylcyclohexyl(ene), 3,4,5-trimethylcyclohexyl(ene), 4-tert-butylcyclohexyl(ene), cycloheptyl(ene), cyclooctyl(ene), and the like, but is not limited thereto.

The term alkenyl group or alkenylene group as used in the present application may be a linear or branched acyclic alkenyl group or alkenylene group with 2 to 20 carbon atoms, or 2 to 16 carbon atoms, or 2 to 12 carbon atoms, or 2 to 8 carbon atoms, or 2 to 6 carbon atoms; or a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkenyl group or alkenylene group with a ring structure is included, it corresponds to a cyclic alkenyl group or alkenylene group. Also, for example, it may be exemplified by ethenyl(ene), n-propenyl(ene), isopropenyl(ene), n-butenyl(ene), isobutenyl(ene), tert-butenyl(ene), sec-butenyl(ene), 1-methyl-butenyl(ene), 1-ethyl-butenyl(ene), n-pentenyl(ene), isopentenyl(ene), neopentenyl(ene), tert-pentenyl(ene), n-hexenyl(ene), 1-methylpentenyl(ene), 2-methylpentenyl(ene), 4-methyl-2-pentenyl(ene), 3,3-dimethylbutenyl(ene), 2-ethylbutenyl(ene), n-heptenyl(ene), 1-methylhexenyl(ene), n-octenyl(ene), tert-octenyl(ene), 1-methylheptenyl(ene), 2-ethylhexenyl(ene), 2-propylpentenyl(ene), n-nonylenenyl(ene), 2,2-dimethylheptenyl(ene), 1-ethylpropenyl(ene), 1,1-dimethylpropenyl(ene), isohexenyl(ene), 2-methylpentenyl(ene), 4-methylhexenyl(ene), 5-methylhexenyl(ene), and the like, but is not limited thereto. In addition, the cycloalkenyl group or cycloalkenylene group may be exemplified by, specifically, cyclopropenyl(ene), cyclobutenyl(ene), cyclopentenyl(ene), 3-methylcyclopentenyl(ene), 2,3-dimethylcyclopentenyl(ene), cyclohexenyl(ene), 3-methylcyclohexenyl(ene), 4-methylcyclohexenyl(ene), 2,3-dimethylcyclohexenyl(ene), 3,4,5-trimethylcyclohexenyl(ene), 4-tert-butylcyclohexenyl(ene), cycloheptenyl(ene), cyclooctenyl(ene), and the like, but is not limited thereto.

The term alkynyl group or alkynylene group as used in the present application may be a linear or branched acyclic alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkynyl group or alkynylene group with a ring structure is included, it corresponds to a cyclic alkynyl group or alkynylene group. Also, for example, it may be exemplified by ethynyl(ene), n-propynyl(ene), isopropynyl(ene), n-butynyl(ene), isobutynyl(ene), tert-butynyl(ene), sec-butynyl(ene), 1-methyl-butynyl(ene), 1-ethyl-butynyl(ene), n-pentynyl(ene), isopentynyl(ene), neopentynyl(ene), tert-pentynyl(ene), n-hexynyl(ene), 1-methylpentynyl(ene), 2-methylpentynyl(ene), 4-methyl-2-pentynyl(ene), 3,3-dimethylbutynyl(ene), 2-ethylbutynyl(ene), n-heptynyl(ene), 1-methylhexynyl(ene), n-octynyl(ene), tert-octynyl(ene), 1-methylheptynyl(ene), 2-ethylhexynyl(ene), 2-propylpentynyl(ene), n-nonynyl(ene), 2,2-dimethylheptynyl(ene), 1-ethylpropynyl(ene), 1,1-dimethylpropynyl(ene), isohexynyl(ene), 2-methylpentynyl(ene), 4-methylhexynyl(ene), 5-methylhexynyl(ene), and the like, but is not limited thereto. In addition, the cycloalkynyl group or cycloalkynylene group may be exemplified by, specifically, cyclopropynyl(ene), cyclobutynyl(ene), cyclopentynyl(ene), 3-methylcyclopentynyl(ene), 2,3-dimethylcyclopentynyl(ene), cyclohexynyl(ene), 3-methylcyclohexynyl(ene), 4-methylcyclohexynyl(ene), 2,3-dimethylcyclohexynyl(ene), 3, 4,5-trimethylcyclohexynyl(ene), 4-tert-butylcyclohexynyl(ene), cycloheptynyl(ene), cyclooctynyl(ene), and the like, but is not limited thereto.

The alkyl group, alkylene group, alkenyl group, alkenylene group, alkynyl group and alkynylene group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group and a hydroxy group, but is not limited thereto.

The term aryl group as used in the present application means an aromatic ring in which one hydrogen is removed from an aromatic hydrocarbon ring, where the aromatic hydrocarbon ring may include a monocyclic or polycyclic ring. The aryl group does not have a particularly limited number of carbon atoms, but may be an aryl group with 6 to 30 carbon atoms, or 6 to 26 carbon atoms, or 6 to 22 carbon atoms, or 6 to 20 carbon atoms, or 6 to 18 carbon atoms, or 6 to 15 carbon atoms, unless otherwise described. In addition, the term arylene group as used in the present application means that the aryl group has two bonding positions, that is, a divalent group. The description of the aryl group as described above may be applied, except that these are each a divalent group. The aryl group may be exemplified by, for example,

a phenyl group, a phenylethyl group, a phenylpropyl group, a benzyl group, a tolyl group, a xylyl group or a naphthyl group, and the like, but is not limited thereto.

The term heteroaryl group as used in the present application is an aromatic ring containing one or more heteroatoms other than carbon, which may contain, specifically, one or more heteroatoms selected from the group consisting of nitrogen (N), oxygen (O), sulfur (S), selenium (Se) and tellurium (Te). In this case, the atoms constituting the ring structure of the heteroaryl group may be referred to as ring atoms. In addition, the heteroaryl group may include a monocyclic or polycyclic ring. The heteroaryl group does not have a particularly limited number of carbon atoms, but may be a heteroaryl group with 2 to 30 carbon atoms, or 2 to 26 carbon atoms, or 2 to 22 carbon atoms, or 2 to 20 carbon atoms, or 2 to 18 carbon atoms, or 2 to 15 carbon atoms, unless otherwise described. In another example, the heteroaryl group does not have a particularly limited number of ring atoms, but may be a heteroaryl group with 5 to 30, 5 to 25, 5 to 20, 5 to 15, 5 to 10, or 5 to 8 ring atoms. The heteroaryl group may be exemplified by, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilol group, a dibenzosilol group, a phenanthrolinyl group, an isoxazolyl group, a thiadiazolyl group, a phenothiazinyl group, a phenoxazine group and condensed structures thereof, and the like, but is not limited thereto.

In addition, the term heteroarylene group as used in the present application means that the heteroaryl group has two bonding positions, that is, a divalent group. The description of the heteroaryl group as described above may be applied, except that these are each a divalent group.

The aryl group or heteroaryl group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

The term (meth)acrylate as used in the present application may collectively refer to acrylate and methacrylate. In addition, acrylate may refer to a compound containing an acryl group, and methacrylate may refer to a compound containing a methacryl group.

The present application relates to a curable composition. The term curable composition as used in the present application means a composition that is cured by a curing reaction. In the present application, it can be confirmed by FT-IR (Fourier Transform Infrared), DSC (Differential Thermal Analysis), and DMA (Dynamic Mechanical Analysis) measurements whether the curing is properly completed by the curing reaction. For example, when an acrylic resin is included in the curable composition, it can be confirmed from the fact that the conversion based on the carbon double bond (C=C) peak at around 1640 $cm^{-1}$ confirmed by FT-IR analysis is 80% or more. In the present application, the curing may be the same as the meaning to attempt so that a curing reaction is performed, as well as that the curing has been properly completed as above.

The curable composition according to one example of the present application may be a resin composition. The term resin composition as used in the present application means a composition comprising a component known in the art as a resin, or a composition that does not comprise a resin, but comprises a component capable of forming a resin through a curing reaction or the like. Therefore, in the present application, the scope of the term resin or resin component includes not only components generally known as resins, but also components capable of forming resins through curing and/or polymerization reactions. Also, the resin component may mean that it comprises a polymer component to be described below, or comprises a polymer component and a monomer component at the same time. In addition, the resin component may mean that it comprises a partially polymerized product partially polymerized from the monomer component, and in another example, it may mean that it further comprises the partially polymerized product and an additional monomer component for dilution.

The curable composition according to one example of the present application may be a one-component or two-component composition. The term one-component composition as used in the present application means a curable composition in which components participating in curing are included in a state where they are in physical contact with each other. In addition, the term two-component composition as used in the present application may mean a curable composition in which at least some of components participating in curing are physically separated to be divided, and included. The curable composition may be more preferably a one-component composition in consideration of management easiness.

The curable composition according to one example of the present application may be a room temperature curing type, a heat curing type, an energy ray curing type, and/or a moisture curing type. The term room temperature curing type as used in the present application refers to a curable composition that a curing reaction can be initiated

and/or proceed at room temperature. Also, the term heat curing type as used in the present application refers to a curable composition that a curing reaction can be initiated and/or proceed by application of heat. In addition, the term energy ray curable type as used in the present application refers to a curable composition that a curing reaction can be initiated and/or proceed by irradiation with energy rays (e.g., ultraviolet rays or electron beams, etc.). Furthermore, the term moisture curing type as used in the present application refers to a curable composition that a curing reaction can be initiated and/or proceed in the presence of moisture.

The curable composition according to one example of the present application may be a composite type of an energy ray curing type and a heat curing type in order to prevent damage due to heat while securing fast curing characteristics.

The curable composition according to one example of the present application may be subjected to primary curing by energy rays and then secondary curing by heating. In addition, the curable composition may be subjected to primary curing by heating and then secondary curing by energy rays.

The curable composition according to one example of the present application may have a relatively low curing temperature when the curing is performed by heating (i.e., thermal curing). The term relatively low curing temperature as used in the present application may mean, at the time of including a thermal initiator, a curing temperature of less than about 60°C, 59°C or less, 58°C or less, 57°C or less, 56°C or less, 55°C or less, 54°C or less, 53°C or less, 52°C or less, 51°C or less, or 50°C or less. The lower limit of the curing temperature is not particularly limited, but in consideration of securing fast curing characteristics, it may be about 10°C or more, 15°C or more, 20°C or more, 25°C or more, 30°C or more, 35°C or more, 40°C or more, or 45°C or more. The curable composition according to one example of the present application may secure fast curing characteristics at a curing temperature of a level capable of preventing thermal damage through an appropriate combination of a resin component and an initiator.

In another example, the relatively low curing temperature may be 90% or less, 89% or less, 88% or less, 87% or less, 86% or less, 85% or less, 84% or less, 83% or less, 82% or less, 81% or less, 80% or less, 79% or less, 78% or less, 77% or less, 76% or less, 75% or less, or 74% or less, relative to the 10-hour half-life temperature of the thermal initiator, or the lower limit is not particularly limited, but may be 10% or more, 15% or more, 20% or more, 25% or more, 30% or more, 35% or more, 40% or more, 45% or more, 50% or more, 55% or more, or 60% or more, or it may be in a range formed by appropriately selecting the above upper and lower limits. The curable composition according to one example of the present application may secure fast curing characteristics at a curing temperature of a level capable of preventing thermal damage through an appropriate combination of a resin component and an initiator.

The curable composition according to one example of the present application may be a solvent type or a solventless type. The solventless type may be appropriate when considering an application efficiency aspect or the load to the environment, and the like.

The curable composition according to one example of the present application may be cured to form a cured product, and may have at least one or more of the following physical properties. The physical properties as described below are each independent, and any one physical property does not take precedence over another physical property, and the cured product of the curable composition may satisfy at least one or two or more of the physical properties as described below. A cured product of a curable composition satisfying at least one or two or more of the physical properties as described below is caused by a combination of each component included in the curable composition. The curable composition may be subjected to primary curing by energy rays and then secondary curing by heating. In addition, the curable composition may be subjected to primary curing by heating and then secondary curing by energy rays. As described above, the following physical properties may appear through composite curing.

The curable composition according to one example of the present application is maintained at 50°C for a relatively short time, whereby a Shore A hardness may be 70 or more, 72 or more, 74 or more, 76 or more, 78 or more, 80 or more, 82 or more, 84 or more, 86 or more, 88 or more, or 90 or more, or may be 100 or less, 99 or less, 98 or less, or 97 or less, or may be in a range formed by appropriately selecting the above upper and lower limits. The curable composition comprises a thermal initiator, and is maintained at 50°C for 30 minutes, whereby a Shore A hardness may be 70 or more, 72 or more, 74 or more, 76 or more, 78 or more, 80 or more, 82 or more, 84 or more, 86 or more, 88 or more, or 90 or more, or may be 100 or less, 99 or less, 98 or less, or 97 or less, or may be in a range formed by appropriately selecting the above upper and lower limits.

Here, the relatively short time may be 50 minutes or less, 49 minutes or less, 48 minutes or less, 47 minutes or less, 46 minutes or less, 45 minutes or less, 44 minutes or less, 43 minutes or less, 42 minutes or less, 41 minutes or less, 40 minutes or less, 39 minutes or less, 38 minutes or less, 37 minutes or less, 36 minutes or less, 35 minutes or less, 34 minutes or less, 33 minutes or less, 32 minutes or less, 31 minutes or less, or 30 minutes or less, or the lower limit is not particularly limited, but it may be 5 minutes or more, 6 minutes or more, 7 minutes or more, 8 minutes or more, 9 minutes or more, 10 minutes or more, 11 minutes or more, 12 minutes or more, 13 minutes or more, 14 minutes or more, 15 minutes or more, 16 minutes or more, 17 minutes or more, 18 minutes or more, 19 minutes or more, 20 minutes or more, 21 minutes or more, 22 minutes or more, 23 minutes or more, 24 minutes or more, 25 minutes or more, 26 minutes or more, 27 minutes or more, 28 minutes or more, 29 minutes or more, or 30 minutes or more, or may be in

a range formed by appropriately selecting the above upper and lower limits. Here, the meaning of the relatively short time means that the time required to complete the curing is short compared to the case where a combination method of an initiator to be described below is not adopted. The curable composition can quickly secure excellent curing characteristics (fast curing) even at a relatively low temperature through a combination of an initiator to be described below.

In the thermal initiator, the 10-hour half-life temperature may be 60°C or more, 61°C or more, 62°C or more, 63°C or more, 64°C or more, or 65°C or more, and the upper limit is not particularly limited, but it may be 200°C or less, 180°C or less, 160°C or less, 140°C or less, 120°C or less, 100°C or less, or 80°C or less, or may be in a range formed by appropriately selecting the above upper and lower limits. Even if the curable composition comprises the thermal initiator having the above-described 10-hour half-life temperature, it can quickly secure excellent curing characteristics (fast curing) even at a relatively low temperature through a combination method of the present application to be described below.

The term half-life temperature as used in the present application indicates a decomposition rate of a specific material, which may mean a temperature required to decompose 50% of the initial specific material in a specific time. For example, the half-life temperature of the initiator may indicate a temperature required for 50% of the initiator to be decomposed for 10 hr, where the half-life temperature may be referred to as a 10-hour half-life temperature. In addition, the half-life temperature of the initiator may be measured in a specific solvent, where the specific solvent may be water, acetone, benzene, or toluene, and the like. In one example, the half-life temperature of the initiator may mean a temperature required for 50% decomposition of the initiator in toluene for 10 hr. In addition, the half-life temperature can be calculated by Arrhenius equation represented by $k_d = A \times e^{-Ea/RT}$ ($k_d$: reaction rate constant for initiator decomposition, A: Arrhenius frequency factor, Ea: decomposition activation energy of initiator, R: gas constant (8.3142 J/mol·K), T: absolute temperature (K)), and specifically, the half-life temperature ($t_{1/2}$) can be calculated as $t_{1/2}$ = ln2/ka. Here, $k_d$ may refer to "Polymer Handbook", Eds. Brandrup, J; Immergut, E.H.; Grulke, E.A., 4th Edition, John Wiley, New York, 1999, II/2-69.

By comprising a cationic initiator while substantially comprising no cationic curable component, the curable composition according to one example of the present application may form a cured product having a Shore A hardness of 70 or more, 72 or more, 74 or more, 76 or more, 78 or more, 80 or more, 82 or more, 84 or more, 86 or more, 88 or more, or 90 or more, or 100 or less, 99 or less, 98 or less, or 97 or less, or in a range formed by appropriately selecting the above upper and lower limits. The cationic curable component may have at least one or more cationic curable functional groups, where the cationic curable functional group includes, for example, an epoxide group, an oxetane group, a cyclic ether group, a sulfide group, an acetal group, or a lactone group. The curable composition may be subjected to primary curing by energy rays and then secondary curing by heating. In addition, the curable composition may be subjected to primary curing by heating and then secondary curing by energy rays. The Shore A hardness may appear through the composite curing, as described above.

In the curable composition according to one example of the present application, the viscosity measured at 25°C and a shear rate of 60 rpm may be 100,000 cPs or more, 110,000 cPs or more, 120,000 cPs or more, 130,000 cPs or more, 140,000 cPs or more, or 150,000 cPs or more, or may be 300,000 cPs or less, 290,000 cPs or less, 280,000 cPs or less, 270,000 cPs or less, 260,000 cPs or less, or 250,000 cPs or less, or may be in a range formed by appropriately selecting the above upper and lower limits. When the curable composition has a viscosity within the above range, it reduces spreadability during application work, whereby workability can be improved and a partial separation phenomenon can be reduced.

In the cured product of the curable composition according to one example of the present application, the adhesion force (or peel force) measured at 25°C with a peel rate of 0.3 mm/min and a peel angle of 180 degrees for PET (polyethylene terephthalate) may be 150 gf/lOmm or more, 160 gf/lOmm or more, 170 gf/lOmm or more, 180 gf/lOmm or more, 190 gf/lOmm or more, or 200 gf/lOmm or more, or may be 800 gf/lOmm or less, 750 gf/lOmm or less, 700 gf/lOmm or less, 650 gf/10 mm or less, 600 gf/10 mm or less, 550 gf/10 mm or less, 500 gf/10 mm or less, or 450 gf/10 mm or less, or may be in a range formed by appropriately selecting the above upper and lower limits. The adhesion force (or peel force) may be specifically measured according to the following physical property measurement methods. As the cured product of the curable composition has adhesion force in the above-described range, it is possible to secure effective fixation, impact resistance, and vibration resistance of the battery cell when applied in a battery module.

In addition, the adhesion force may be an adhesion force to any substrate or module case with which the cured product of the curable composition is in contact. If such an adhesion force can be secured, the appropriate adhesion force can appear to various materials, for example, a case or battery cell included in a battery module, and the like. Furthermore, if the adhesion force in this range is secured, peeling or the like by volume changes during charging and discharging of battery cells in the battery module, changes in the use temperatures of the battery module or curing shrinkage, and the like is prevented, whereby excellent durability can be secured.

It may be advantageous for the cured product of the curable composition according to one example of the present application to exhibit an appropriate hardness. For example, if the hardness of the cured product of the curable composition is too high, the cured product becomes brittle, which may adversely affect reliability. In addition, through

adjustment of the hardness of the curable composition, impact resistance and vibration resistance may be secured, and durability of the product may also be secured. In the cured product of the curable composition, for example, the Shore A hardness may be 70 or more, 72 or more, 74 or more, 76 or more, 78 or more, 80 or more, 82 or more, 84 or more, 86 or more, 88 or more, or 90 or more, or may be 100 or less, 99 or less, 98 or less, or 97 or less, or may be in a range formed by appropriately selecting the above upper and lower limits. The hardness of the cured product of the curable composition is usually influenced by the type or content ratio of the filler component contained in the cured product, and the hardness is generally increased when an excessive amount of the filler component is included. However, the resin component contained in the cured product may also affect the hardness. The Shore A hardness may be specifically measured according to the following physical property measurement methods.

The cured product of the curable composition according to one example of the present application may have a thermal conductivity of 2 W/mK or more. In a state where the curable composition is made of a cured product (sample) having a diameter of 2 cm or more and a thickness of 2 mm, the thermal conductivity may be a value measured according to ASTM D5470 standard or ISO 22007-2 standard along the thickness direction of the sample. The thermal conductivity may be specifically measured according to the following physical property measurement methods. In another example, the cured product of the curable composition may have a thermal conductivity of 2.1 W/mK or more, 2.2 W/mK or more, 2.3 W/mK or more, 2.4 W/mK or more, 2.5 W/mK or more, 2.6 W/mK or more, 2.7 W/mK or more, 2.8 W/mK or more, 2.9 W/mK or more, or 3.0 W/mK or more as measured according to the following measurement method. The higher value the thermal conductivity has, it means higher thermal conductance, so that the upper limit is not particularly limited. For example, the thermal conductivity may be 50 W/mK or less, 45 W/mK or less, 40 W/mK or less, 35 W/mK or less, 30 W/mK or less, 25 W/mK or less, 20 W/mK or less, 18 W/mK or less, 16 W/mK or less, 14 W/mK or less, 12 W/mK or less, 10 W/mK or less, 8 W/mK or less, 6 W/mK or less, or 4 W/mK or less.

The cured product of the curable composition according to one example of the present application may have a thermal resistance of about 5 K/W or less, about 4.5 K/W or less, about 4 K/W or less, about 3.5 K/W or less, about 3 K/W or less, or about 2.8 K/W or less. In the case of adjusting such that the thermal resistance in this range can appear, excellent cooling efficiency or heat dissipation efficiency can be secured. The thermal resistance may be a value measured according to ASTM D5470 standard or ISO 22007-2 standard, and the measurement method is not particularly limited.

The cured product of the curable composition according to one example of the present application may secure durability in order to be applied to products requiring a long warranty period such as automobiles (in the case of automobiles, about 15 years or more). The durability may mean that after a thermal shock test in which one cycle is set to a process of maintaining the temperature at a low temperature of about -40°C for 30 minutes and then raising the temperature to 80°C and maintaining it for 30 minutes, and the cycle is repeated 100 times, separating, or peeling, or cracks do not occur from the module case or battery cells of the battery module.

The cured product of the curable composition according to one example of the present application may have electrical insulation of about 3 kV/mm or more, about 5 kV/mm or more, about 7 kV/mm or more, 10 kV/mm or more, 15 kV/mm or more, or 20 kV/mm or more. As a dielectric breakdown voltage has a higher value, the cured product of the curable composition shows excellent insulation, where it may be about 50 kV/mm or less, 45 kV/mm or less, 40 kV/mm or less, 35 kV/mm or less, or 30 kV/mm or less, but is not particularly limited. In order to achieve such a dielectric breakdown voltage, insulating filler particles may also be applied to the curable composition. In general, among thermally conductive filler particles, ceramic filler particles are known as a component capable of securing insulation. The electrical insulation may be measured with a dielectric breakdown voltage measured according to ASTM D149 standard. In addition, if the cured product of the curable composition can secure the electrical insulation as above, stability can be secured while maintaining performance with respect to various materials, for example, a case or battery cell included in a battery module, and the like.

The cured product of the curable composition according to one example of the present application may have a specific gravity of 5 or less. In another example, the specific gravity may be 4.5 or less, 4 or less, 3.5 or less, or 3 or less. As the specific gravity of the cured product of the curable composition has a lower value, it is more advantageous for weight saving of the applied product, so that the lower limit thereof is not particularly limited. For example, the specific gravity may be about 1.5 or more, or 2 or more. In order for the cured product of the curable composition to exhibit such a specific gravity, for example, a method of applying a filler that the desired thermal conductivity can be secured even at a low specific gravity when the thermal conductive filler is added, that is, a filler having a low specific gravity by itself, or applying a surface-treated filler, or the like may be used.

It is appropriate that the cured product of the curable composition according to one example of the present application does not include a volatile material if possible. For example, in the cured product of the curable composition, the ratio of nonvolatile components may be 90 wt% or more, 95 wt% or more, or 98 wt% or more. Here, the ratio with the nonvolatile component can be defined in the following manner. That is, with regard to the nonvolatile content, a portion remaining after the cured product of the curable composition is maintained at 100°C for about 1 hour can be defined as the nonvolatile content, and thus the ratio can be measured based on the ratio after maintaining it at 100°C for 1 hour or so with the initial weight of the cured product of the curable composition.

The cured product of the curable composition according to one example of the present application may have an excellent resistance to deterioration, if necessary, where stability that does not react chemically, if possible, may be required.

It may be advantageous for the cured product of the curable composition according to one example of the present application to have a low shrinkage ratio during or after curing. Through this, it is possible to prevent occurrence of peeling or voids, and the like that may occur in the process of manufacturing or using various materials, for example, a case or battery cell included in a battery module, and the like. The shrinkage ratio may be appropriately adjusted within a range capable of exhibiting the above-described effects, which may be, for example, less than 5%, less than 3%, or less than about 1%. Since the shrinkage ratio is more advantageous as the numerical value is lower, the lower limit thereof is not particularly limited.

The cured product of the curable composition according to one example of the present application may also advantageously have a low coefficient of thermal expansion (CTE). Through this, it is possible to prevent occurrence of peeling or voids, and the like that may occur in the process of manufacturing or using various materials, for example, a case or battery cell included in a battery module, and the like. The coefficient of thermal expansion may be appropriately adjusted within a range capable of exhibiting the above-described effects, which may be, for example, less than 300 ppm/K, less than 250 ppm/K, less than 200 ppm/K, less than 150 ppm/K, or less than 100 ppm/K. Since the coefficient of thermal expansion is more advantageous as the numerical value is lower, the lower limit thereof is not particularly limited.

In the cured product of the curable composition according to one example of the present application, tensile strength may be appropriately adjusted, and through this, an excellent impact resistance and the like may be secured. The tensile strength may be adjusted, for example, in the range of about 1.0 MPa or more.

In the cured product of the curable composition according to one example of the present application, a 5% weight loss temperature in thermogravimetric analyses (TGA) may also be 400°C or higher, or the remaining amount at 800°C may be 70 wt% or more. Due to these characteristics, stability at high temperature may be further improved with respect to various materials, for example, a case or battery cell included in a battery module, and the like. In another example, the remaining amount at 800°C may be about 75 wt% or more, about 80 wt% or more, about 85 wt% or more, or about 90 wt% or more. In another example, the remaining amount at 800°C may be about 99 wt% or less. The thermogravimetric analysis (TGA) may be measured within a range of 25°C to 800°C at a temperature increase rate of 20°C/min under a nitrogen ($N_2$) atmosphere of 60 $cm^3$/min. The thermogravimetric analysis (TGA) results can also be achieved by adjusting the composition of the cured product of the curable composition. For example, the remaining amount at 800°C depends on the type or ratio of the thermally conductive filler component contained in the cured product of the curable composition, and when an excessive amount of the thermally conductive filler component is included, the remaining amount increases. However, when the polymer and/or monomer used in the curable composition has generally high heat resistance compared to other polymers and/or monomers, the remaining amount more increases, and the polymer and/or monomer component included in the cured product of the curable composition also affects the hardness as such.

The curable composition according to one example of the present application may comprise a resin component. As described above, the resin component comprises components that can form resins through curing and/or polymerization reactions as well as components generally known as resins.

The curable composition according to one example of the present application may comprise a resin component in an amount of 1 part by weight or more, 1.5 parts by weight or more, 2 parts by weight or more, 2.5 parts by weight or more, 3 parts by weight or more, 3.5 parts by weight or more, 4 parts by weight or more, 4.5 parts by weight or more, 5 parts by weight or more, 5.5 parts by weight or more, 6 parts by weight or more, 6.5 parts by weight or more, 7 parts by weight or more, 7.5 parts by weight or more, or 8 parts by weight or more, or 50 parts by weight or less, 45 parts by weight or less, 40 parts by weight or less, 35 parts by weight or less, 30 parts by weight or less, 25 parts by weight or less, 20 parts by weight or less, 15 parts by weight or less, or 10 parts by weight or less, relative to 100 parts by weight of the filler component, or in a range formed by appropriately selecting the above upper and lower limits. The curable composition can form a thick film having excellent curing properties even at a relatively low temperature by controlling the resin component in the above range, and can secure an excellent level of thermal conductivity as well as a desired level of appropriate adhesion force.

In the curable composition according to one example of the present application, the resin component may have a glass transition temperature of -50°C or more, -49.5°C or more, or -49°C or more, or 0°C or less, -1°C or less, -2°C or less, -3°C or less, -4°C or less, -5°C or less, -6°C or less, -7°C or less, -8°C or less, -9°C or less, -10°C or less, -11°C or less, -12°C or less, or -13°C or less, or in a range formed by appropriately selecting the above upper and lower limits. When the resin component has a glass transition temperature in the above-described range, it may be advantageous to the process because it has appropriate fluidity, and it is possible to secure an appropriate level of adhesion force while securing a high hardness. The glass transition temperature may be measured using a differential scanning calorimeter (DSC), and may be specifically measured according to the following physical property measurement methods.

In the curable composition according to one example of the present application, the resin component may

comprise a polymer component. Also, the resin component may comprise a monomer component. In addition, the resin component may comprise a polymer component and a monomer component.

In the curable composition according to one example of the present application, the polymer component included in the resin component may contain a unit derived from a compound having a curable functional group. The term unit derived from a specific compound as used in the present application may be described, in a polymer obtained by polymerization of the specific compound, as a repeating unit formed by the specific compound. In addition, the term curable functional group as used in the present application may mean a functional group that induces a curing reaction by heat, energy rays, and/or moisture, and the like. The curable functional group may include, for example, one or more functional groups selected from the group consisting of an alkenyl group, an alkynyl group, a (meth)acrylate group, a carboxyl group, an amide group, an amino group, an epoxy group, an isocyanate group, a cyano group, an acid anhydride group, a mercapto group, a silanol group, an alkoxysilane group, a hydroxyl group, and an oxazoline group, it may be, preferably, one selected from a (meth)acrylate group, an epoxy group, an isocyanate group, and a mercapto group, and it may be, more preferably, a (meth)acrylate group. In addition, the curable functional group may be divided into a polymerizable functional group and a crosslinkable functional group. The polymerizable functional group may be exemplified by an alkenyl group, an alkynyl group, and a (meth)acrylic group, and the like, and the crosslinkable functional group may be exemplified by a carboxyl group and a hydroxyl group, and the like.

In the curable composition according to one example of the present application, the resin component may comprise the polymer component in an amount of 10 wt% or more, 15 wt% or more, 20 wt% or more, 25 wt% or more, 30 wt% or more, 35 wt% or more, or 40% or more, or 70 wt% or less, 65 wt% or less, 60 wt% or less, 55 wt% or less, or 50 wt% or less, relative to the total weight of the resin component, or in a range formed by appropriately selecting the above upper and lower limits. In the curable composition, when the resin component comprises the polymer component in the above-described range, it is possible to secure an excellent hardness with appropriate bonding performance.

In the curable composition according to one example of the present application, the resin component comprises only the monomer component, where the monomer component may be included in an amount of 20 wt% or more, 25 wt% or more, 30 wt% or more, 35 wt% or more, 40 wt% or more, or 45 wt% or more, or 75 wt% or less, 70 wt% or less, 65 wt% or less, 60 wt% or less, or 55 wt% or less, relative to the total weight of the resin component, or in a range formed by appropriately selecting the above upper and lower limits. When the resin component in the curable composition contains only the monomer component in the above-described range, it is possible to secure excellent hardness with appropriate bonding performance.

In the curable composition according to one example of the present application, the resin component comprises a polymer component and a monomer component, where it may comprise the monomer component in an amount of 50 parts by weight or more, 55 parts by weight or more, 60 parts by weight or more, 65 parts by weight or more, 70 parts by weight or more, 75 parts by weight or more, 80 parts by weight or more, 85 parts by weight or more, 90 parts by weight or more, 95 parts by weight or more, or 100 parts by weight or more, or 500 parts by weight or less, 450 parts by weight or less, 400 parts by weight or less, 350 parts by weight or less, 300 parts by weight or less, 250 parts by weight or less, 200 parts by weight or less, or 150 parts by weight or less, relative to 100 parts by weight of the polymer component, or in a range formed by appropriately selecting the above upper and lower limits. In the curable composition, when the resin component comprises the polymer component and the monomer component in combination in the above-described range, it is possible to secure excellent hardness with appropriate bonding performance.

In the curable composition according to one example of the present application, the polymer component of the resin component may comprise an acrylic polymer component. The term acrylic polymer component as used in the present application may mean that the unit derived from (meth) acrylate is included in an amount of 55 wt% or more, 60 wt% or more, 70 wt% or more, 80 wt% or more, 90 wt% or more, or 100 wt% or more relative to the total weight.

In the curable composition according to one example of the present application, the acrylic polymer component may comprise a (meth)acrylate-derived unit containing an alkyl group and a (meth)acrylate-derived unit containing a hydroxyl group. As the acrylic polymer component comprises simultaneously the above units, it is possible to secure an excellent hardness as well as a desired level of adhesion force.

In the curable composition according to one example of the present application, the acrylic polymer component may comprise the (meth)acrylate-derived unit containing an alkyl group in an amount of 40 wt% or more, 42 wt% or more, 44 wt% or more, 46 wt% or more, 48 wt% or more, 50 wt% or more, 52 wt% or more, 54 wt% or more, 56 wt% or more, 58 wt% or more, or 60 wt% or more, or 95 wt% or less, 92.5 wt% or less, 90 wt% or less, or 87.5 wt% or less, relative to the total weight of the acrylic polymer component, or in a range formed by appropriately selecting the above upper and lower limits. When the acrylic polymer component comprises the (meth)acrylate-derived unit containing an alkyl group in the above range, it is possible to secure excellent thermal conductivity as well as the hardness desired in the present application.

In the (meth)acrylate-derived unit containing an alkyl group included in the acrylic polymer component, the alkyl group may include one or more selected from the group consisting of a linear alkyl group, a branched alkyl group, and a cyclic alkyl group.

The acrylic polymer component may comprise a (meth)acrylate-derived unit containing a linear or branched alkyl group. In addition, the acrylic polymer component may comprise the (meth)acrylate-derived unit containing a linear or branched alkyl group in an amount of 50 wt% or more, 55 wt% or more, 60 wt% or more, or 100 wt% or less, or 95 wt% or less, relative to the total weight, or in a range formed by appropriately selecting the above upper and lower limits. When the acrylic polymer component comprises the (meth)acrylate-derived unit containing a linear or branched alkyl group in the above range, it is possible to secure excellent thermal conductivity as well as the hardness desired in the present application.

The acrylic polymer component may comprise i) a (meth)acrylate-derived unit containing a linear or branched alkyl group and ii) a (meth)acrylate-derived unit containing a cyclic alkyl group. At this time, the acrylic polymer component may comprise the (meth)acrylate-derived unit containing a cyclic alkyl group in an amount of 10 parts by weight or more, 15 parts by weight or more, 20 parts by weight or more, 25 parts by weight or more, 30 parts by weight or more, 35 parts by weight or more, or 40 parts by weight or more, or 80 parts by weight or less, 75 parts by weight or less, 70 parts by weight or less, 65 parts by weight or less, 60 parts by weight or less, 55 parts by weight or less, 50 parts by weight or less, or 45 parts by weight or less, relative to 100 parts by weight of the (meth)acrylate-derived unit containing a linear or branched alkyl group, or in a range formed by appropriately selecting the above upper and lower limits. When the acrylic polymer component appropriately combines the (meth)acrylate-derived unit containing a linear or branched alkyl group and the (meth)acrylate-derived unit containing a cyclic alkyl group as in the above range, it is possible to secure excellent thermal conductivity as well as the hardness desired in the present application.

In the curable composition according to one embodiment of the present application, the acrylic polymer component may comprise the (meth) acrylate-derived unit containing a hydroxyl group in an amount of 1 part by weight or more, 3 parts by weight or more, 5 parts by weight or more, 7 parts by weight or more, 9 parts by weight or more, 11 parts by weight or more, 13 parts by weight or more, 15 parts by weight or more, or 17 parts by weight or more, or 100 parts by weight or less, 95 parts by weight or less, 90 parts by weight or less, 85 parts by weight or less, 80 parts by weight or less, 75 parts by weight or less, or 70 parts by weight or less, relative to 100 parts by weight of the (meth) acrylate-derived unit containing an alkyl group as described above, or in a range formed by appropriately selecting the above upper and lower limits. As the acrylic polymer component combines the (meth)acrylate-derived unit containing a hydroxyl group and the (meth)acrylate-derived unit containing an alkyl group as in the above range, wetting properties for the adherend surface are secured, so that it is possible to secure excellent hardness and thermal conductivity as well as a desired level of adhesion force.

In the curable composition according to one example of the present application, the acrylic polymer component may comprise a methacrylate-derived unit containing a hydroxyl group. The acrylic polymer component may comprise the methacrylate-derived unit containing a hydroxyl group in an amount of 1 part by weight or more, 3 parts by weight or more, 5 parts by weight or more, 7 parts by weight or more, 9 parts by weight or more, 11 parts by weight or more, 13 parts by weight or more, 15 parts by weight or more, 17 parts by weight or more, or 100 parts by weight or less, 95 parts by weight or less, 90 parts by weight or less, 85 parts by weight or less, 80 parts by weight or less, 75 parts by weight or less, 70 parts by weight or less, 65 parts by weight or less, 60 parts by weight or less, 55 parts by weight or less, 50 parts by weight or less, 45 parts by weight or less, 40 parts by weight or less, 35 parts by weight or less, or 30 parts by weight or less, relative to 100 parts by weight of the (meth)acrylate-derived unit containing an alkyl group as described above, or in a range formed by appropriately selecting the above upper and lower limits. As the acrylic polymer component combines the methacrylate-derived unit containing a hydroxyl group and the (meth)acrylate-derived unit containing an alkyl group as in the above range, wetting properties for the adherend surface are secured, and the glass transition temperature as well as a desired level of adhesion force is controlled, so that it is possible to secure excellent hardness and thermal conductivity.

In the curable composition according to one example of the present application, the acrylic polymer component may comprise i) a methacrylate-derived unit containing a hydroxyl group and ii) an acrylate-derived unit containing a hydroxyl group. The acrylic polymer component may comprise the acrylate-derived unit containing a hydroxyl group in an amount of 100 parts by weight or more, 110 parts by weight or more, 120 parts by weight or more, 130 parts by weight or more, 140 parts by weight or more, 150 parts by weight or more, or 160 parts by weight or more, or 200 parts by weight or less, 190 parts by weight or less, 180 parts by weight or less, or 170 parts by weight or less, relative to 100 parts by weight of the methacrylate-derived unit containing a hydroxyl group, or in a range formed by appropriately selecting the above upper and lower limits. As the acrylic polymer component combines the methacrylate-derived unit containing a hydroxyl group and the acrylate-derived unit containing a hydroxyl group as in the above range, wetting properties for the adherend surface are secured, so that it is possible to secure excellent hardness and thermal conductivity as well as a desired level of adhesion force.

In the curable composition according to one example of the present application, the acrylic polymer component may comprise a unit derived from a compound represented by Formula 1 below.

[Formula 1]

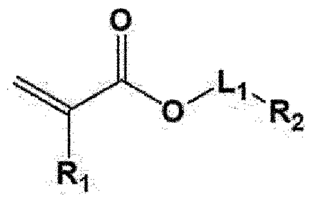

In Formula 1, $R_1$ is hydrogen or a methyl group.

Also, in Formula 1, $R_2$ may be one selected from the group consisting of hydrogen; an alkyl group with 1 to 20 carbon atoms, 1 to 16 carbon atoms, 1 to 12 carbon atoms, or 1 to 8 carbon atoms; a functional group represented by Formula 2 below; and a functional group represented by Formula 3 below.

[Formula 2]

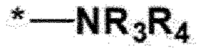

In Formula 2, $R_3$ and $R_4$ are each independently hydrogen; or an alkyl group with 1 to 20 carbon atoms, 1 to 16 carbon atoms, 1 to 12 carbon atoms, 1 to 8 carbon atoms, 1 to 4 carbon atoms, or 1 to 3 carbon atoms.

[Formula 3]

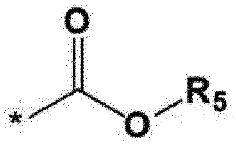

In Formula 3, $R_5$ is hydrogen; or an alkyl group with 1 to 20 carbon atoms, 1 to 16 carbon atoms, 1 to 12 carbon atoms, 1 to 8 carbon atoms, 1 to 4 carbon atoms, or 1 to 3 carbon atoms.

Also, in Formula 1, $L_1$ may be one selected from the group consisting of a single bond; an alkylene group with 1 to 20 carbon atoms, 1 to 16 carbon atoms, 1 to 8 carbon atoms, or 1 to 4 carbon atoms; and a linking group represented by Formula 4 below.

[Formula 4]

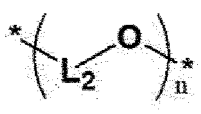

In Formula 4, $L_2$ is an alkylene group with 1 to 20 carbon atoms, 1 to 16 carbon atoms, 1 to 12 carbon atoms, 1 to 8 carbon atoms, or 1 to 4 carbon atoms. In addition, n is an integer within a range of 1 to 100, 1 to 50, 1 to 25, 1 to 10, or 1 to 5.

In the present application, * shown in Formulas 2, 3, and 4 is a bonding site, which means a portion chemically bonded to the main chain. For example, * shown in Formulas 2 and 3 means a portion where a chemical bond is made with $L_1$ in Formula 1, and one of the * shown in Formula 4 means a portion where a chemical bond is made with an oxygen (O) atom bonded to $L_1$ in Formula 1, and the other means a portion where a chemical bond is made with $R_2$ in Formula 1.

In the curable composition according to one example of the present application, the acrylic polymer component may comprise the unit derived from the compound represented by Formula 1 above in an amount of 10 parts by weight or more, 12.5 parts by weight or more, 15 parts by weight or more, 17.5 parts by weight or more, 20 parts by weight or more, 22.5 parts by weight or more, 25 parts by weight or more, 27.5 parts by weight or more, 30 parts by weight or

more, 32.5 parts by weight or more, 35 parts by weight or more, 37.5 parts by weight or more, or 40 parts by weight or more, or 100 parts by weight or less, 95 parts by weight or less, 90 parts by weight or less, 85 parts by weight or less, 80 parts by weight or less, 75 parts by weight or less, 70 parts by weight or less, 65 parts by weight or less, 60 parts by weight or less, 55 parts by weight or less, 50 parts by weight or less, or 45 parts by weight or less, relative to 100 parts by weight of the (meth)acrylate-derived unit containing an alkyl group as described above, or in a range formed by appropriately selecting the above upper and lower limits. As the unit derived from the compound represented by Formula 1 above is controlled in the content ratio and included in the acrylic polymer component, it is possible to secure an excellent hardness as well as a desired level of adhesion force.

In the curable composition according to one example of the present application, the acrylic polymer component may have a weight average molecular weight ($M_w$) of 30,000 g/mol or more, 32,500 g/mol or more, 35,000 g/mol or more, 37,500 g/mol or more, 40,000 g/mol or more, 42,500 g/mol or more, 45,000 g/mol or more, 47,500 g/mol or more, 50,000 g/mol or more, 52,500 g/mol or more, 55,000 g/mol or more, 57,500 g/mol or more, or 60,000 g/mol or more, or 200,000 g/mol or less, 180,000 g/mol or less, 160,000 g/mol or less, 140,000 g/mol or less, 120,000 g/mol or less, 100,000 g/mol or less, or 80,000 g/mol or less, or in a range formed by appropriately selecting the above upper and lower limits. Also, in the curable composition, the acrylic polymer component may have a polydispersity index (PDI) in a range of 1 to 4, 1 to 3.75, 1 to 3.5, 1 to 3.25, 1 to 3, 1 to 2.75, 1 to 2.5, 1 to 2.25, 1 to 2, 1 to 1.95, 1 to 1.9, or 1 to 1.85. When the acrylic polymer component satisfies the polydispersity index as well as the weight average molecular weight ($M_w$) as described above within the above range, it is possible to secure a cured product which has excellent volume resistance while having appropriate hardness and adhesion force, and is not brittle, and it is possible to secure excellent curing properties.

In the curable composition according to one example of the present application, the monomer component included in the resin component may comprise a compound having a curable functional group. As described above, the curable functional group means a functional group that induces a curing reaction by heat, energy rays and/or moisture, and the like, which may comprise one or more functional groups selected from the group consisting of an alkenyl group, an alkynyl group, a (meth)acrylate group, a carboxyl group, an amide group, an amino group, an epoxy group, an isocyanate group, a cyano group, an acid anhydride group, a mercapto group, a silanol group, an alkoxysilane group, a hydroxyl group, and an oxazoline group. Also, the curable functional group may preferably be one selected from a (meth)acrylate group, an epoxy group, an isocyanate group, and a mercapto group, and may more preferably be a (meth)acrylate group. In addition, the monomer component may mean a so-called monomer set mixed with one or more types in the resin component.

In the curable composition according to one example of the present application, the monomer component of the resin component may comprise an acrylic monomer component. The term acrylic monomer component as used in the present application may mean one that the (meth)acrylate is included in an amount of 55 wt% or more, 60 wt% or more, 70 wt% or more, 80 wt% or more, 90 wt% or more, or 100 wt% relative to the total weight.

In the curable composition according to one example of the present application, the acrylic monomer component may comprise a (meth)acrylate containing an alkyl group and a (meth)acrylate containing a hydroxyl group. As the acrylic monomer component comprises the (meth)acrylates at the same time, it is possible to secure excellent hardness as well as a desired level of adhesion force.

In the curable composition according to one example of the present application, the acrylic monomer component may comprise the (meth)acrylate containing an alkyl group in an amount of 40 wt% or more, 42 wt% or more, 44 wt% or more, 46 wt% or more, 48 wt% or more, 50 wt% or more, 52 wt% or more, 54 wt% or more, 56 wt% or more, or 58 wt% or more, or 80 wt% or less, 78 wt% or less, 76 wt% or less, 74 wt% or less, or 72 wt% or less, or in a range formed by appropriately selecting the above upper and lower limits. When the acrylic monomer component comprises the (meth)acrylate containing an alkyl group within the above range, it is possible to secure excellent thermal conductivity as well as the hardness desired in the present application.

In the (meth)acrylate containing an alkyl group included in the acrylic monomer component, the alkyl group may comprise one or more selected from the group consisting of a linear alkyl group, a branched alkyl group, and a cyclic alkyl group.

The acrylic monomer component may comprise the (meth)acrylate containing a linear or branched alkyl group. In addition, the acrylic monomer component may comprise the (meth)acrylate containing a linear or branched alkyl group in an amount of 50 wt% or more, 55 wt% or more, or 60 wt% or more, or 100 wt% or less, or 95 wt% or less, relative to the total weight, or in a range formed by appropriately selecting the upper and lower limits. When the acrylic monomer component comprises the (meth)acrylate containing a linear or branched alkyl group within the above range, it is possible to secure excellent thermal conductivity as well as the hardness desired in the present application.

The acrylic monomer component may comprise i) a (meth)acrylate containing a linear or branched alkyl group and ii) a (meth)acrylate containing a cyclic alkyl group. At this time, the acrylic monomer component may comprise the (meth)acrylate containing a cyclic alkyl group in an amount of 10 parts by weight or more, 15 parts by weight or more, 20 parts by weight or more, 25 parts by weight or more, 30 parts by weight or more, 35 parts by weight or more, or 40

parts by weight or more, or 80 parts by weight or less, 75 parts by weight or less, 70 parts by weight or less, 65 parts by weight or less, 60 parts by weight or less, 55 parts by weight or less, 50 parts by weight or less, or 45 parts by weight or less, relative to 100 parts by weight of the (meth)acrylate containing a linear or branched alkyl group, or in a range formed by appropriately selecting the above upper and lower limits. When the acrylic monomer component appropriately combines the (meth)acrylate containing a linear or branched alkyl group and the (meth)acrylate containing a cyclic alkyl group as in the above range, it is possible to secure excellent thermal conductivity as well as the hardness desired in the present application.

In the curable composition according to one example of the present application, the acrylic monomer component may comprise the (meth)acrylate containing a hydroxyl group in an amount of 50 parts by weight or more, 60 parts by weight or more, 70 parts by weight or more, 80 parts by weight or more, 90 parts by weight or more, 100 parts by weight or more, 110 parts by weight or more, 120 parts by weight or more, or 130 parts by weight or more, or 500 parts by weight or less, 450 parts by weight or less, 400 parts by weight part or less, 350 parts by weight or less, 300 parts by weight or less, or 250 parts by weight or less, relative to 100 parts by weight of the (meth)acrylate containing an alkyl group as described above, or in a range formed by appropriately selecting the above upper and lower limits. As the acrylic monomer component combines the (meth)acrylate containing a hydroxyl group and the (meth)acrylate containing an alkyl group as in the above range, wetting properties for the adherend surface are secured, so that it is possible to secure excellent hardness and thermal conductivity as well as a desired level of adhesion force. In addition, the curable composition is preferably a solventless type, and the (meth)acrylate containing a hydroxyl group as the monomer may be used for a dilution use instead of a commonly used solvent. By using the (meth)acrylate containing a hydroxyl group for the dilution use, wetting properties for the adherend surface are secured, so that it is possible to secure a desired level of adhesion force.

In the curable composition according to one example of the present application, the acrylic monomer component may comprise a methacrylate containing a hydroxyl group. The acrylic monomer component may comprise the methacrylate containing a hydroxyl group in an amount of 1 part by weight or more, 3 parts by weight or more, 5 parts by weight or more, 7 parts by weight or more, 9 parts by weight or more, 11 parts by weight or more, 13 parts by weight or more, 15 parts by weight or more, or 17 parts by weight or more, or 100 parts by weight or less, 95 parts by weight or less, 90 parts by weight or less, 85 parts by weight or less, 80 parts by weight or less, 75 parts by weight or less, 70 parts by weight or less, 65 parts by weight or less, 60 parts by weight or less, 55 parts by weight or less, 50 parts by weight or less, 45 parts by weight or less, 40 parts by weight or less, 35 parts by weight or less, or 30 parts by weight or less, relative to 100 parts by weight of the (meth)acrylate containing an alkyl group as described above, or in a range formed by appropriately selecting the upper and lower limits. As the acrylic monomer component combines the methacrylate containing a hydroxyl group and the (meth)acrylate containing an alkyl group as in the above range, wetting properties for the adherend surface are secured, so that it is possible to secure excellent hardness and thermal conductivity by controlling the glass transition temperature as well as a desired level of adhesion force.

In the curable composition according to one example of the present application, the acrylic monomer component may comprise i) a methacrylate containing a hydroxyl group and ii) an acrylate containing a hydroxyl group. The acrylic monomer component may comprise the acrylate containing a hydroxyl group in an amount of 100 parts by weight or more, 150 parts by weight or more, 200 parts by weight or more, 250 parts by weight or more, 300 parts by weight or more, 350 parts by weight or more, 400 parts by weight or more, 450 parts by weight or more, 500 parts by weight or more, 550 parts by weight or more, 600 parts by weight or more, or 650 parts by weight or more, or 2,000 parts by weight or less, 1,800 parts by weight or less, 1,600 parts by weight or less, 1,400 parts by weight or less, 1,200 parts by weight or less, 1,000 parts by weight or less, or 800 parts by weight or less, relative to 100 parts by weight of the methacrylate containing a hydroxyl group, or in a range formed by appropriately selecting the above upper and lower limits. As the acrylic monomer component combines the methacrylate containing a hydroxyl group and the acrylate containing a hydroxyl group as in the above range, wetting properties for the adherend surface are secured, it is possible to secure excellent hardness and thermal conductivity as well as a desired level of adhesion force.

In the curable composition according to one example of the present application, the acrylic monomer component may comprise a compound represented by Formula 1 below.

[Formula 1]

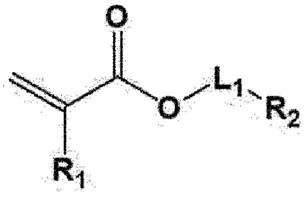

In Formula 1, $R_1$ is hydrogen or a methyl group.

Also, in Formula 1, $R_2$ may be one selected from the group consisting of hydrogen; an alkyl group with 1 to 20 carbon atoms, 1 to 16 carbon atoms, 1 to 12 carbon atoms, or 1 to 8 carbon atoms; a functional group represented by Formula 2 below; and a functional group represented by Formula 3 below.

[Formula 2]

$$*-NR_3R_4$$

In Formula 2, $R_3$ and $R_4$ are each independently hydrogen; or an alkyl group with 1 to 20 carbon atoms, 1 to 16 carbon atoms, 1 to 12 carbon atoms, 1 to 8 carbon atoms, 1 to 4 carbon atoms, or 1 to 3 carbon atoms.

[Formula 3]

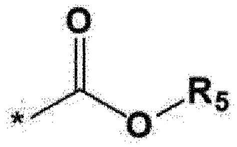

In Formula 3, $R_5$ is hydrogen; or an alkyl group with 1 to 20 carbon atoms, 1 to 16 carbon atoms, 1 to 12 carbon atoms, 1 to 8 carbon atoms, 1 to 4 carbon atoms, or 1 to 3 carbon atoms.

Also, in Formula 1, $L_1$ may be one selected from the group consisting of a single bond; an alkylene group with 1 to 20 carbon atoms, 1 to 16 carbon atoms, 1 to 8 carbon atoms, or 1 to 4 carbon atoms; and a linking group represented by Formula 4 below.

[Formula 4]

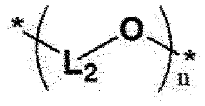

In Formula 4, $L_2$ is an alkylene group with 1 to 20 carbon atoms, 1 to 16 carbon atoms, 1 to 12 carbon atoms, 1 to 8 carbon atoms, or 1 to 4 carbon atoms. In addition, n is an integer within a range of 1 to 100, 1 to 50, 1 to 25, 1 to 10, or 1 to 5.

In the present application, * shown in Formulas 2, 3, and 4 is a bonding site, which means a portion chemically bonded to the main chain. For example, * shown in Formulas 2 and 3 means a portion where a chemical bond is made with $L_1$ in Formula 1, and one of the * shown in Formula 4 means a portion where a chemical bond is made with an oxygen (O) atom bonded to $L_1$ in Formula 1, and the other means a portion where a chemical bond is made with $R_2$ in Formula 1.

In the curable composition according to one example of the present application, the acrylic monomer component may comprise the compound represented by Formula 1 above in an amount of 10 parts by weight or more, 12.5 parts by weight or more, 15 parts by weight or more, 17.5 parts by weight or more, 20 parts by weight or more, 22.5 parts by weight or more, 25 parts by weight or more, 27.5 parts by weight or more, 30 parts by weight or more, 32.5 parts by weight or more, 35 parts by weight or more, 37.5 parts by weight or more, or 40 parts by weight or more, or 100 parts by weight or less, 95 parts by weight or less, 90 parts by weight or less, 85 parts by weight or less, 80 parts by weight or less, 75 parts by weight or less, 70 parts by weight or less, 65 parts by weight or less, 60 parts by weight or less, 55 parts by weight or less, 50 parts by weight or less, or 45 parts by weight or less, relative to 100 parts by weight of the (meth)acrylate-derived unit containing an alkyl group as described above, or in a range formed by appropriately selecting the above upper and lower limits. As the compound represented by Formula 1 above is controlled in the content ratio and included in the acrylic monomer component, it is possible to secure an excellent hardness as well as a desired level of adhesion force.

The curable composition according to one example of the present application may comprise a filler component. The curable composition may achieve the object of the present application through an appropriate combination of the

resin component and the filler component.

In the curable composition according to one example of the present application, the type, shape, and size of the filler component are not particularly limited if it is used in the art. Also, the filler component may comprise one or more filler particles. Furthermore, even though the same type of filler particles is used, the filler component may be one that particles having different shapes are mixed, and may also be one that particles having different particle average particle diameters are mixed. For example, the filler component may be one that aluminum hydroxide and aluminum oxide (alumina) are mixed, where the shapes and average particle diameters of the aluminum hydroxide and aluminum oxide may be different from each other.

The curable composition according to one example of the present application may comprise an excessive amount of a filler component. The curable composition may secure excellent thermal conductivity by comprising an excessive amount of a filler component. The curable composition may comprise the filler component in an amount of 60 wt% or more, 62 wt% or more, 64 wt% or more, 66 wt% or more, 68 wt% or more, 70 wt% or more, 72 wt% or more, 74 wt% or more, 76 wt% or more, 78 wt% or more, 80 wt% or more, 82 wt% or more, 84 wt% or more, 86 wt% or more, or 88 wt% or more, or 98 wt% or less, 97 wt% or less, 96 wt% or less, or 95 wt% or less, relative to the total weight, or in a range formed by appropriately selecting the above upper and lower limits. The case where the curable composition comprises the filler component in the above-described range can be regarded as including an excess amount, and through this, it is possible to secure excellent thermal conductivity.

In the curable composition according to one example of the present application, the filler component may comprise a filler having a particle average particle diameter of 0.01 μm or more, or 1,000 μm or less. The filler component may comprise a filler having 70 μm or more. In another example, the particle average particle diameter of the filler may be 75 μm or more, 80 μm or more, 85 μm or more, 90 μm or more, 95 μm or more, 100 μm or more, 105 μm or more, 110 μm or more, 115 μm or more, or 120 μm or more, may be 1,000 μm or less, or 500 μm or less, or may be in a range formed by appropriately selecting the above upper and lower limits. The filler having a particle average particle diameter in the above range may be referred to as a filler A in the present application, and the type and number of the filler A are not particularly limited if the particle average particle diameter is 70 μm or more.

The term particle average particle diameter as used in the present application is the D50 particle diameter of the filler, which is a particle diameter measured by Marvern's MASTERSIZER3000 equipment in accordance with ISO-13320 standard. Upon the measurement, distilled water was used as a solvent. The incident laser is scattered by the fillers dispersed in the solvent, and the values of the intensity and directionality of the scattered laser vary depending on the size of the filler, which are analyzed using the Mie theory, whereby the D50 particle diameter can be obtained. Through the above analysis, the distribution can be obtained through conversion to the diameter of a sphere having the same volume as the dispersed fillers, and the particle diameter can be evaluated by obtaining the D50 value, which is the median value of the distribution.

The shape of the filler A particles may be appropriately selected from a spherical shape and/or a non-spherical shape (e.g., needle shape and plate shape, etc.) as needed, and used, but is not limited thereto.

The matter that the term spherical shape of the filler particles as used in the present application may mean that the sphericity is about 0.9 or more, and the non-spherical shape may mean that the sphericity is less than about 0.9.

The sphericity can be confirmed through a particle shape analysis of the filler particles. Specifically, the sphericity of the filler, which is a three-dimensional particle, may be defined as a ratio (S'/S) of the surface area (S') of a sphere having the same volume as that of a particle to the surface area (S) of the particle. For real particles, circularity is generally used. The circularity is expressed as a ratio of the boundary of a circle having the same image and the same area (A) as a two-dimensional image of a real particle thus obtained to the boundary (P) of the image, which is obtained by the following equation.

<Circularity equation>

$$\text{Circularity} = 4\pi A/P^2$$

The circularity is expressed as a value from 0 to 1, where a perfect circle has a value of 1, and as a particle has an irregular shape, it has a value lower than 1. The sphericity value in the present application may be measured as an average value of circularity measured with Marvern's particle shape analysis equipment (FPIA-3000).

In the curable composition according to one example of the present application, the filler component may comprise the filler A particles in an amount of 10 wt% or more, 15 wt% or more, 20 wt% or more, 25 wt% or more, 30 wt% or more, 35 wt% or more, or 40 wt% or more, or 100 wt% or less, 99.5 wt% or less, 90 wt% or less, 80 wt% or less, 70 wt% or less, 60 wt% or less, 50 wt% or less, 40 wt% or less, or 30 wt% or less, relative to the total weight of the filler component, or in a range formed by appropriately selecting the above upper and lower limits. As the filler component comprises the filler A particles in the above-described range, it can have appropriate viscosity and thixotropy, and secure

excellent thermal conductivity.

In the curable composition according to one example of the present application, the filler component may comprise a filler having a particle average particle diameter of more than 20 μm, 25 μm or more, 30 μm or more, 35 μm or more, 40 μm or more, 45 μm or more, or 50 μm or more, or less than 70 μm, 65 μm or less, 60 μm or less, 55 μm or less, or 50 μm or less, or in a range formed by appropriately selecting the above upper and lower limits. The filler particles having a particle average particle diameter in the above range may be referred to as filler B particles in the present application. The type and number of the filler B particles are not particularly limited if the particle average particle diameter satisfies the above range.

The shape of the filler B particles may be appropriately selected from a spherical shape and/or a non-spherical shape (e.g., needle shape and plate shape, etc.) as needed, and used, but is not limited thereto.

In the curable composition according to one example of the present application, the filler component may comprise the filler B particles in an amount of 5 wt% or more, 7.5 wt% or more, 10 wt% or more, 12.5 wt% or more, 15 wt% or more, 17.5 wt% or more, or 20 wt% or more, or 100 wt% or less, 90 wt% or less, 80 wt% or less, 70 wt% or less, 60 wt% or less, 50 wt% or less, 40 wt% or less, or 30 wt% or less, relative to the total weight of the filler component, or in a range formed by appropriately selecting the above upper and lower limits. As the filler component comprises the filler B particles in the above-described range, it can have appropriate viscosity and thixotropy, and secure excellent thermal conductivity.

In addition, in the curable composition according to one example of the present application, the filler component may comprise filler A particles and filler B particles.

In the curable composition according to one example of the present application, when the filler component comprises filler A particles and filler B particles, the curable composition may comprise the filler B particles in an amount of 10 parts by weight or more, 15 parts by weight or more, 20 parts by weight or more, 25 parts by weight or more, 30 parts by weight or more, 35 parts by weight or more, 40 parts by weight or more, or 45 parts by weight or more, or 200 parts by weight or less, 180 parts by weight or less, 160 parts by weight or less, 140 parts by weight or less, 120 parts by weight or less, 100 parts by weight or less, 80 parts by weight or less, or 60 parts by weight or less, relative to 100 parts by weight of the filler A particles, or in a range formed by appropriately selecting the above upper and lower limits. When the content ratio of the filler A and filler B particles in the filler component is adjusted as in the above range, a curable composition having an appropriate viscosity can be formed, and a cured product having excellent thermal conductivity can be formed.

In the curable composition according to one example of the present application, when the filler component comprises filler A particles and filler B particles, the ratio ($D_A/D_B$) of the diameter ($D_A$) of the filler A particles to the diameter ($D_B$) of the filler B particles may be 1.05 or more, 1.1 or more, 1.15 or more, 1.2 or more, 1.25 or more, 1.3 or more, 1.35 or more, or 1.4 or more, or may be 2.3 or less, 2.25 or less, 2.2 or less, 2.15 or less, 2.1 or less, 2.0 or less, 1.9 or less, 1.8 or less, 1.7 or less, 1.6 or less, 1.5 or less, or 1.4 or less, or may be in a range formed by appropriately selecting the above upper and lower limits. When the ratio ($D_A/D_B$) of the diameter ($D_A$) of the filler A particles to the diameter ($D_B$) of the filler B particles satisfies the above range, it is possible to secure fast curing characteristics of the curable composition.

In the curable composition according to one example of the present application, the filler component may comprise a filler having a particle average particle diameter of 20 μm or less, 18 μm or less, 16 μm or less, 14 μm or less, 12 μm or less, 10 μm or less, or 8 μm or less, or 0.01 μm or more, 0.05 μm or more, 0.1 μm or more, 0.2 μm or more, 0.4 μm or more, 0.8 μm or more, 1 μm or more, 2 μm or more, 3 μm or more, 4 μm or more, or 5 μm or more, or in a range formed by appropriately selecting the above upper and lower limits. The filler particles having a particle average particle diameter within the above range may be referred to as filler C particles in the present application. The type and number of the filler C particles are not particularly limited if the particle average particle diameter satisfies the above range.

The shape of the filler C particles may be appropriately selected from a spherical shape and/or a non-spherical shape (e.g., needle shape and plate shape, etc.) as needed, and used, but is not limited thereto.

In the curable composition according to one example of the present application, the filler component may comprise the filler C particles in an amount of 10 wt% or more, 15 wt% or more, 20 wt% or more, 25 wt% or more, 30 wt% or more, 35 wt% or more, or 40 wt% or more, or 100 wt% or less, 99.5 wt% or less, 90 wt% or less, 80 wt% or less, 70 wt% or less, 60 wt% or less, 50 wt% or less, 40 wt% or less, or 30 wt% or less, relative to the total weight of the filler component, or in a range formed by appropriately selecting the above upper and lower limits. As the filler component comprises the filler C particles in the above-described range, it can have appropriate viscosity and thixotropy, and secure excellent thermal conductivity.

In the curable composition according to one example of the present application, the filler component may comprise one or more selected from the group consisting of filler A particles, filler B particles, and filler C particles. Also, in the curable composition according to one example of the present application, the filler component may comprise one or more selected from the group consisting of filler A particles and filler B particles, and filler C particles.

In addition, in the curable composition according to one example of the present application, the filler component may comprise filler A particles and filler C particles.

In the curable composition according to one example of the present application, when the filler component comprises filler A particles and filler C particles, the curable composition may comprise the filler C particles in an amount of 50 parts by weight or more, 60 parts by weight or more, 70 parts by weight or more, 80 parts by weight or more, 90 parts by weight or more, or 100 parts by weight or more, or 300 parts by weight or less, 280 parts by weight or less, 260 parts by weight or less, 240 parts by weight or less, 220 parts by weight or less, 200 parts by weight or less, 180 parts by weight or less, 160 parts by weight or less, 140 parts by weight or less, or 120 parts by weight or less, relative to 100 parts by weight of the filler A particles, or in a range formed by appropriately selecting the above upper and lower limits. When the content ratio of the filler A and filler C particles in the filler component is adjusted as in the above range, a curable composition having an appropriate viscosity can be formed, and a cured product having excellent thermal conductivity can be formed..

In the curable composition according to one example of the present application, the filler component may comprise filler B particles and filler C particles without comprising the filler A.

In the curable composition according to one example of the present application, when the filler component comprises filler B particles and filler C particles without comprising the filler A, the curable composition may comprise the filler C particles in an amount of 100 parts by weight or more, 120 parts by weight or more, 140 parts by weight or more, 160 parts by weight or more, 180 parts by weight or more, or 200 parts by weight or more, or 500 parts by weight or less, 475 parts by weight or less, 450 parts by weight or less, 425 parts by weight or less, 400 parts by weight or less, 375 parts by weight or less, 350 parts by weight or less, 325 parts by weight or less, 300 parts by weight or less, 275 parts by weight or less, or 250 parts by weight or less, relative to 100 parts by weight of the filler B particles, or in a range formed by appropriately selecting the above upper and lower limits. When the content ratio of the filler B and filler C particles in the filler component is adjusted as in the above range, a curable composition having an appropriate viscosity can be formed, and a cured product having excellent thermal conductivity can be formed

In the curable composition according to one example of the present application, the filler component may be a thermally conductive filler component for treating heat generated from a battery or the like, and may comprise at least one or more thermally conductive filler particles. The thermally conductive filler particle may have its own thermal conductivity of about 1 W/mK or more, 5 W/mK or more, 10 W/mK or more, or 15 W/mK or more, and in another example, it may mean one that it is about 400 W/mK or less, about 350 W/mK or less, or about 300 W/mK or less. The thermal conductivity of the thermally conductive filler particles that may be included in the filler component is not particularly limited, but may be a value measured according to ASTM E1461. Also, in the thermally conductive filler component, the thermal conductivity may be about 1 W/mK or more, 5 W/mK or more, 10 W/mK or more, or 15 W/mK or more, and in other examples, it may be about 400 W/mK or less, about 350 W/mK or less, or about 300 W/mK or less, and may be a value measured according to ASTM E1461.

In the curable composition according to one example of the present application, the type of the thermally conductive filler particle included in the filler component is not particularly limited as long as the above-described own thermal conductivity satisfies the above range, but it may be, for example, oxides such as aluminum oxide (alumina), magnesium oxide, beryllium oxide or titanium oxide; nitrides such as boron nitride, silicon nitride or aluminum nitride; carbides such as silicon carbide; hydrated metals such as aluminum hydroxide or magnesium hydroxide; metal fillers such as copper, silver, iron, aluminum or nickel; metal alloy fillers such as titanium; or a mixture thereof, and the like.

In the curable composition according to one example of the present application, the filler component may comprise filler particles having Mohs hardness of 6 or more, 6.5 or more, 7 or more, 7.5 or more, 8 or more, or 8.5 or more. The term Mohs hardness as used herein may be measured using a Mohs scale. In addition, the filler particles having Mohs hardness in the above range may be referred to as first filler particles in the present application.

In the curable composition according to one example of the present application, the filler component may comprise the first filler particles in an amount of 30 wt% or more, 35 wt% or more, 40 wt% or more, 45 wt% or more, or 50 wt% or more, 55 wt% or more, or 60 wt% or more, or 100 wt% or less, 97.5 wt% or less, 95 wt% or less, or 92.5 wt% or less, relative to the total weight of the filler component, or in a range formed by appropriately selecting the above upper and lower limits. When the filler component comprises the first filler particles while satisfying the above range, it is possible to secure excellent hardness.

In the curable composition according to one example of the present application, the filler particles (i.e., the above-described filler A particles) having a particle average particle diameter of 70 μm or more in the filler component may comprise filler particles having Mohs hardness of 6 or more, 6.5 or more, 7 or more, 7.5 or more, 8 or more, or 8.5 or more (i.e., the above-described first filler particles). At this time, the filler A particles may comprise the first filler particles in an amount of 55 wt% or more, 75 wt% or more, or 95 wt% or more, relative to the total weight of the filler A particles.

In the curable composition according to one example of the present application, the filler particles (i.e., the above-described filler B particles) having a particle average particle diameter of more than 20 μm to less than 70 μm in the filler component may comprise filler particles having Mohs hardness of 6 or more, 6.5 or more, 7 or more, 7.5 or

more, 8 or more, or 8.5 or more (i.e., the above-described first filler particles). At this time, the filler B particles may comprise the first filler particles in an amount of 55 wt% or more, 75 wt% or more, or 95 wt% or more, relative to the total weight of the filler B particles.

In the curable composition according to one example of the present application, the filler component may further comprise filler particles having Mohs hardness of less than 6, 5.5 or less, 5 or less, 4.5 or less, 4 or less, 3.5 or less, or 3 or less in order to adjust the viscosity, processability and hardness after curing of the curable composition. The filler particles having Mohs hardness within the above range may be referred to as second filler particles in the present application.

In the curable composition according to one example of the present application, the filler component may comprise the second filler particles in an amount of 100 parts by weight or less, 90 parts by weight or less, 80 parts by weight or less, 70 parts by weight or less, or 60 parts by weight or less, or 10 parts by weight or more, 20 parts by weight or more, 30 parts by weight or more, 40 parts by weight or more, or 50 parts by weight or more, relative to 100 parts by weight of the first filler particles, or in a range formed by appropriately selecting the above upper and lower limits.

In the curable composition according to one example of the present application, the filler particles (i.e., the above-described filler C particles) having a particle average particle diameter of 0.01 μm or more to 20 μm or less in the filler component may comprise filler particles having Mohs hardness of less than 6, 5.5 or less, 5 or less, or 4.5 or less, 4 or less, 3.5 or less, or 3 or less (i.e., the above-described second filler particles) may be included. At this time, the filler C particles may comprise the second filler particles in an amount of 55 wt% or more, 75 wt% or more, or 95 wt% or more relative to the total weight of the filler C particles.

The curable composition according to one example of the present application may comprise a thermal initiator. That is, the curable composition may perform a curing reaction by a heat curing method in the presence of a thermal initiator. The thermal initiator may generate radicals by heat and proceed with a curing reaction by the radicals.

In the curable composition according to one example of the present application, the thermal initiator is not particularly limited as long as it is used in the art, but, for example, one or two or more of an azo-based initiator such as 2,2'-azobis(4-methoxy-2,4-dimethylvaleronitrile) (V-70, Wako (product)), 2,2-azobis-2,4-dimethylvaleronitrile (V-65, Wako (product)), 2,2-azobisisobutyronitrile (AIBN, V-60, Wako (product)) or 2,2-azobis-2-methylbutyronitrile (V-59, Wako (product)); a peroxyester compound such as dipropyl peroxydicarbonate (Peroyl NPP, NOF (product)), diisopropyl peroxy dicarbonate (Peroyl IPP, NOF (product)), bis-4-butylcyclohexyl peroxy dicarbonate (Peroyl TCP, NOF (product) )), diethoxyethyl peroxy dicarbonate (Peroyl EEP, NOF (product)), diethoxyhexyl peroxy dicarbonate (Peroyl OPP, NOF (product)), hexyl peroxy dicarbonate (Perhexyl ND, NOF (product)), dimethoxybutyl peroxy dicarbonate (Peroyl MBP, NOF (product)), bis(3-methoxy-3-methoxybutyl) peroxy dicarbonate (Peroyl SOP, NOF (product)), hexyl peroxy pivalate (Perhexyl PV, NOF (product), amyl peroxy pivalate (Luperox 546M75, Atofina (product)), butyl peroxy pivalate (Perbutyl, NOF (product)) or trimethylhexanoyl peroxide (Peroyl 355, NOF (product)); a peroxy dicarbonate compound such as dimethyl hydroxybutyl peroxaneodecanoate (Luperox 610M75, Atofina (product)), amyl peroxy neodecanoate (Luperox 546M75, Atofina (product)) or butyl peroxy neodecanoate (Luperox 10M75, Atofina (product)); a peroxide initiator, such as an acyl peroxide such as 3,5,5-trimethylhexanoyl peroxide, lauryl peroxide or dibenzoyl peroxide; ketone peroxide; dialkyl peroxide; peroxy ketal; or hydroperoxide, and the like may be used. In terms of securing appropriate physical properties desired in the present application, it may be appropriate to apply the azo-based initiator of the foregoing.

In the curable composition according to one example of the present application, the thermal initiator may have a 10-hour half-life temperature of 60°C or more, 61°C or more, 62°C or more, 63°C or more, 64°C or more, 65°C or more, 66°C or more, 67°C or more, or 68°C or more, or the upper limit is not particularly limited, but it may be 200°C or less, 180°C or less, 160°C or less, 140°C or less, 120°C or less, 100°C or less, or 80°C or less, or it may b e in a range formed by appropriately selecting the above upper and lower limits.

Even if the curable composition according to one example of the present application comprises a thermal initiator having a 10-hour half-life temperature within the above range, it is maintained at 50°C for a relatively short time, whereby the Shore A hardness may be 70 or more, 72 or more, 74 or more, 76 or more, 78 or more, 80 or more, 82 or more, 84 or more, 86 or more, 88 or more, or 90 or more, or may be 100 or less, 99 or less, 98 or less, or 97 or less, or may be in a range formed by appropriately selecting the above upper and lower limits. The curable composition can achieve the above properties through a combination of suitable initiators. The curable composition may be subjected to primary curing by energy rays and then secondary curing by heating. In addition, the curable composition may be subjected to primary curing by heating and then secondary curing by energy rays. The Shore A hardness may appear through composite curing as follows.

Here, the relatively short time may be 50 minutes or less, 49 minutes or less, 48 minutes or less, 47 minutes or less, 46 minutes or less, 45 minutes or less, 44 minutes or less, 43 minutes or less, 42 minutes or less, 41 minutes or less, 40 minutes or less, 39 minutes or less, 38 minutes or less, 37 minutes or less, 36 minutes or less, 35 minutes or less, 34 minutes or less, 33 minutes or less, 32 minutes or less, 31 minutes or less, or 30 minutes or less, or the lower limit is not particularly limited, but it may be 5 minutes or more, 6 minutes or more, 7 minutes or more, 8 minutes or more, 9 minutes or more, 10 minutes or more, 11 minutes or more, 12 minutes or more, 13 minutes or more, 14 minutes

or more, 15 minutes or more, 16 minutes or more, 17 minutes or more, 18 minutes or more, 19 minutes or more, 20 minutes or more, 21 minutes or more, 22 minutes or more, 23 minutes or more, 24 minutes or more, 25 minutes or more, 26 minutes or more, 27 minutes or more, 28 minutes or more, 29 minutes or more, or 30 minutes or more, or it may be in a range formed by appropriately selecting the above upper and lower limits. Here, the relatively short time means that the time required to complete curing is short compared to the case where the initiator combination method to be described below is not adopted. The curable composition can quickly secure excellent curing characteristics even at a relatively low temperature (fast curing) through a combination of initiators to be described below.

The curable composition according to one example of the present application may comprise a thermal initiator in an amount of 0.1 wt% or more, 0.2 wt% or more, 0.3 wt% or more, 0.4 wt% or more, 0.5 wt% or more, 0.6 wt% or more, or 0.7 wt% or more, 0.8 wt% or more, 0.9 wt% or more, or 1 wt% or more, or 3 wt% or less, 2.9 wt% or less, 2.8 wt% or less, 2.7 wt% or less, 2.6 wt% or less, 2.5 wt% or less, 2.4 wt% or less, 2.3 wt% or less, 2.2 wt% or less, 2.1 wt% or less, 2 wt% or less, 1.9 wt% or less, 1.8 wt% or less, 1.7 wt% or less, 1.6 wt% or less, 1.5 wt% or less, 1.4 wt% or less, 1.3 wt% or less, or 1.2 wt% or less, relative to the total weight, or in a range formed by appropriately selecting the above upper and lower limits. As the curable composition comprises the thermal initiator within the above range, it is possible to secure fast curing characteristics and excellent curing properties.

The curable composition according to one example of the present application may comprise a photoinitiator. That is, the curable composition may perform a curing reaction by an energy ray curing method in the presence of a photoinitiator.

The curable composition according to one example of the present application may comprise a photoinitiator in an amount of 0.1 wt% or more, 0.2 wt% or more, 0.3 wt% or more, 0.4 wt% or more, 0.5 wt% or more, 0.6 wt% or more, 0.7 wt% or more, 0.8 wt% or more, 0.9 wt% or more, 1 wt% or more, 1.1 wt% or more, 1.2 wt% or more, 1.3 wt% or more, 1.4 wt% or more, 1.5 wt% or more, 1.6 wt% or more, or 1.7 wt% or more, or 3 wt% or less, 2.9 wt% or less, 2.8 wt% or less, 2.7 wt% or less, 2.6 wt% or less, 2.5 wt% or less, 2.4 wt% or less, 2.3 wt% or less, 2.2 wt% or less, 2.1 wt% or less, or 2 wt% or less, relative to the total weight, or in a range formed by appropriately selecting the above upper and lower limits. As the curable composition comprises the photoinitiator within the above range, it is possible to secure fast curing characteristics and excellent curing properties.

In addition, the curable composition according to one example of the present application may comprise both a photoinitiator and a thermal initiator. That is, the curable composition may perform a curing reaction by a heat curing method and an energy ray curing method in the presence of the thermal initiator and the photoinitiator.

In the curable composition according to one example of the present application, the weight ratio ($I_H/I_U$) of thermal initiator ($I_H$) and photoinitiator (Iu) may be 0.01 or more, 0.02 or more, 0.03 or more, 0.04 or more, 0.05 or more, 0.06 or more, 0.07 or more, 0.08 or more, 0.09 or more, 0.1 or more, 0.2 or more, 0.3 or more, 0.4 or more, 0.5 or more, 0.6 or more, 0.7 or more, 0.8 or more, 0.9 or more, 1 or more, 1.1 or more, 1.2 or more, 1.3 or more, 1.4 or more, or 1.5 or more, or 5 or less, 4.5 or less, 4 or less, 3.5 or less, 3 or less, 2.5 or less, or 2 or less, or in a range formed by appropriately selecting the above upper and lower limits. As the curable composition controls the content ratio of the thermal initiator and the photoinitiator within the above-described range, it can form a thick film having excellent curing characteristics even at a relatively low temperature, and secure an excellent level of thermal conductivity as well as a desired level of appropriate adhesion force.

The curable composition according to one example of the present application may comprise the photoinitiator in a higher amount than that of the thermal initiator based on the weight.

In the curable composition according to one example of the present application, the photoinitiator may comprise one or more selected from the group consisting of a radical initiator and a cationic initiator. In another example, the photoinitiator in the curable composition may comprise a radical initiator and a cationic initiator simultaneously. Through the combination of these initiators, the curable composition can form a thick film having excellent curing properties even at a relatively low temperature, and secure an excellent level of thermal conductivity as well as a desired level of appropriate adhesion force.

In the curable composition according to one example of the present application, the radical initiator used as the photoinitiator receives energy rays to generate radicals, and as the radical initiator, radical initiators commonly used in the art may be used without limitation. A specific example may include one or more selected from the group consisting of 1-hydroxycyclohexyl-phenyl-ketone, 2-hydroxy-2-methyl-1-phenyl-1-propanone, 2-hydroxy-1-[4-(2-hydroxyethoxy)phenyl]-2-methyl-1-propanone, methylbenzoyl formate, oxy-phenyl-acetic acid-2-[2-oxo-2-phenyl-acetoxy-ethoxy]-ethyl ester, oxy-phenyl-acetic acid-2-[2-hydroxy-ethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl (2,4,6-trimethylbenzoyl)-phosphine oxide, phosphine oxide, and phenylbis(2,4,6-trimethylbenzoyl)-phosphineoxide, but is not limited thereto.

In addition, the cationic initiator used as the photoinitiator is a compound that generates an acid ($H^+$) by energy rays, and the cationic initiator usable in the present invention is, preferably, one that for example, a sulfonium salt or an iodonium salt is included. A specific examples may include one or more selected from the group consisting of diphenyl

(4-phenylthio)phenylsulfonium hexafluoroantimonate, diphenyl (4-phenylthio)phenylsulfonium hexafluorophosphate, (4-methylphenyl)[4-(2-methylpropyl)phenyl]-iodonium hexafluorophosphate, (phenyl)[4-(2-methylpropyl)phenyl]-iodonium hexafluorophosphate, (thiodi-4,1-phenylene)bis(diphenylsulfonium) dihexafluoroantimonate and (thiodi-4,1-phenylene)bis(diphenylsulfonium) dihexafluorophosphate, but is not limited thereto.

In the curable composition according to one example of the present application, the photoinitiator may comprise the radical initiator in an amount of 10 wt% or more, 12 wt% or more, 14 wt% or more, 16 wt% or more, 18 wt% or more, 20 wt% or more, 22 wt% or more, 24 wt% or more, 26 wt% or more, 28 wt% or more, 30 wt% or more, or 32 wt% or more, or 95 wt% or less, 90 wt% or less, 85 wt% or less, 80 wt% or less, 75 wt% or less, 70 wt% or less, 65 wt% or less, 60 wt% or less, 55 wt% or less, 50 wt% or less, 45 wt% or less, 40 wt% or less, or 35 wt% or less, relative to the total weight of the photoinitiator, or in a range formed by appropriately selecting the above upper and lower limits. As the curable composition applies the thermal initiator and the photoinitiator simultaneously and controls the content of the radical initiator in the photoinintiator in the above-described range, it can form a thick film having excellent curing properties even at a relatively low temperature, and secure an excellent level of thermal conductivity as well as a desired level of appropriate adhesion force.

In the curable composition according to one example of the present application, the weight ratio ($I_R/I_P$) of the radical initiator ($I_R$) and the cationic initiator ($I_P$) in the photoinitiator may be 0.01 or more, 0.02 or more, 0.03 or more, 0.04 or more, 0.05 or more, 0.06 or more, 0.07 or more, 0.08 or more, 0.09 or more, 0.1 or more, 0.15 or more, 0.2 or more, 0.25 or more, 0.3 or more, 0.35 or more, 0.4 or more, 0.45 or more, or 0.5 or more, or may be 2 or less, 1.9 or less, 1.8 or less, 1.7 or less, 1.6 or less, 1.5 or less, 1.4 or less, 1.3 or less, 1.2 or less, 1.1 or less, 1 or less, 0.9 or less, 0.8 or less, 0.7 or less, or 0.6 or less, or may be controlled in a range formed by appropriately selecting the above upper and lower limits. As the curable composition applies the thermal initiator and the photoinitiator simultaneously and controls the content ratio of the cationic initiator and the radical initiator in the photoinintiator in the above-described range, it can form a thick film having excellent curing properties even at a relatively low temperature, and secure an excellent level of thermal conductivity as well as a desired level of appropriate adhesion force.

In the curable composition according to one example of the present application, the photoinitiator may comprise the cationic initiator in a higher amount than that of the radical initiator based on the weight.

The curable composition according to one example of the present application may comprise a radical curable component. The term radical curable component as used in the present application may mean a component that may be cured by radical polymerization according to energy ray irradiation. The radical curable component may have at least one radical curable functional group, and the energy rays may be made by irradiation of electromagnetic waves such as microwaves, infrared (IR), ultra violet (UV), X-rays, or gamma rays, as well as particle beams such as alpha-particle beam (alpha-particle beam), proton beam (proton beam), neutron beam (neutron beam) and electron beam (electron beam).

In the curable composition according to one example of the present application, the radical curable component may comprise the acrylic polymer component and acrylic monomer component as described above. The acrylic polymer component and the acrylic monomer component may refer to the above contents.

The curable composition according to one example of the present application may substantially comprise no cationic curable component. That is, the curable composition may comprise the cationic curable component in an amount of 1 wt% or less, 0.5 wt% or less, 0.1 wt% or less, 0.05 wt% or less, or 0.01 wt% or less relative to the total weight of the cationic curable component, or may not, preferably, comprise it at all (0 wt%). The term cationic curable component as used in the present application may mean a component that may be cured by cationic polymerization according to energy ray irradiation. The cationic curable component may have at least one cationic curable functional group, and the cationic curable functional group includes, for example, an epoxide group, an oxetane group, a cyclic ether group, a sulfide group, an acetal group, or a lactone group. The curable composition can form a thick film having excellent curing properties even at a relatively low temperature, and secure an excellent level of thermal conductivity as well as a desired level of appropriate adhesion force through the combination of appropriate initiators despite substantially comprising no cationic curable component.

The curable composition according to one example of the present application comprises a photoinitiator together with a radical curable component, where the photoinitiator may comprise a cationic initiator, and the curable composition may substantially comprise no cationic curable component. Here, the curable composition may form a cured product having a Shore A hardness of 70 or more, 72 or more, 74 or more, 76 or more, 78 or more, 80 or more, 82 or more, 84 or more, 86 or more, 88 or more, or 90 or more, or 100 or less, 99 or less, 98 or less, or 97 or less, or in a range formed by appropriately selecting the above upper and lower limits. Through the combination of the above-described initiators, the curable composition can form a thick film having excellent curing properties even at a relatively low temperature, and secure an excellent level of thermal conductivity as well as a desired level of appropriate adhesion force.

When the curable composition according to one example of the present application comprises a cationic initiator as the photoinitiator without substantially comprising a cationic curable component, it may comprise a sensitizer. The sensitizer may activate the cationic initiator in the curable composition by receiving long-wavelength light energy. The

term long-wavelength light energy as used in the present application means the energy of light in a wavelength region of approximately 300 to 410 nm.

The type of the sensitizer is not particularly limited, but the sensitizer may include, for example, a carbonyl compound, an organic sulfur compound, a persulfide, a redox-based compound, azo and diazo compounds, an anthracene compound, a halogen compound, and a photoreducible dye, and the like. More specifically, as the sensitizer, those generally used in the art such as 2,4-diethyl-9H-thioxanthen-9-one (DETX) or isopropylthioxanthone (ITX) may be adopted.

The curable composition according to one example of the present application may comprise the sensitizer in an amount of 0.01 parts by weight or more, 0.02 parts by weight or more, 0.03 parts by weight or more, 0.04 parts by weight or more, 0.05 parts by weight or more, 0.06 parts by weight or more, 0.07 parts by weight or more, or 0.08 parts by weight or more, or 1 part by weight or less, 0.75 parts by weight or less, 0.5 parts by weight or less, or 0.1 parts by weight or less, relative to 100 parts by weigh of the filler component, or in a range formed by appropriately selecting the above upper and lower limits. When the content ratio of the sensitizer satisfies the above range, it can properly activate the cationic initiator to induce a curing reaction, even if the curable composition comprises the cationic initiator as the photoinitiator without substantially containing any cationic curable component.

The curable composition according to one example of the present application may further comprise one, or two or more additives exemplified below in order to secure additional physical properties. However, the additives are sufficient if they are generally usable in the art, and are not necessarily limited to the additives exemplified below.

The curable composition according to one example of the present application may further comprise a plasticizer. The type of the plasticizer is not particularly limited, but for example, one or more of a phthalic acid compound, a phosphoric acid compound, an adipic acid compound, a sebacic acid compound, a citric acid compound, a glycolic acid compound, a trimellitic acid compound, a polyester compound, an epoxidized soybean oil, chlorinated paraffin, a chlorinated fatty acid ester, a fatty acid compound, a compound having a saturated aliphatic chain substituted with a sulfonic acid group to which a phenyl group is bonded (e.g., LANXESS' mesamoll) and a vegetable oil may be selected and used.

As the phthalic acid compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate and n-decyl phthalate may be used. As the phosphoric acid compound, one or more of tricresyl phosphate, trioctyl phosphate, triphenyl phosphate, octyl diphenyl phosphate, cresyl diphenyl phosphate and trichloroethyl phosphate may be used. As the adipic acid compound, one or more of dibutoxyethoxyethyl adipate (DBEEA), dioctyl adipate, diisooctyl adipate, di-n-octyl adipate, didecyl adipate, diisononyl adipate (DINA), diisodecyl adipate (DIDP), n-octyl n-decyl adipate, n-heptyl adipate and n-nonyl adipate may be used. As the sebacic acid compound, one or more of dibutyl sebacate, dioctyl sebacate, diisooctyl sebacate and butyl benzyl may be used. As the citric acid compound, one or more of triethyl citrate, acetyl triethyl citrate, tributyl citrate, acetyl tributyl citrate and acetyl trioctyl citrate may be used. As the glycolic acid compound, one or more of methyl phthalyl ethyl glycolate, ethyl phthalyl ethyl glycolate and butyl phthalyl ethyl glycolate may be used. As the trimellitic acid compound, one or more of trioctyl trimellitate and tri-n-octyl n-decyl trimellitate may be used. The polyester compound may be a reaction product of a diol selected from butane diol, ethylene glycol, propane 1,2-diol, propane 1,3-diol, polyethylene glycol, glycerol, a diacid (selected from adipic acid, succinic acid, and succinic anhydride) and a hydroxy acid (such as, hydroxystearic acid).

The curable composition according to one example of the present application may comprise the plasticizer in an amount of 0.1 parts by weight or more, 0.2 parts by weight or more, 0.3 parts by weight or more, 0.4 parts by weight or more, 0.5 parts by weight or more, or 0.6 parts by weight or more, or 5 parts by weight or less, 4.5 parts by weight or less, 4 parts by weight or less, 3.5 parts by weight or less, 3 parts by weight or less, 2.5 parts by weight or less, or 2 parts by weight or less, relative to 100 parts by weigh of the filler component, or in a range formed by appropriately selecting the above upper and lower limits. When the content ratio of the plasticizer satisfies the above range, it is possible to improve compatibility of the curable composition.

In the curable composition according to one example of the present application, the plasticizer is preferably an adipic acid compound in consideration of compatibility between the resin component or the radical curable component and the filler component applied in the present application.

The curable composition according to one example of the present application may further comprise a dispersant. As the dispersant, for example, polyamideamine and its salt, polycarboxylic acid and its salt, modified polyurethane, modified polyester, modified poly(meth)acrylate, a (meth)acrylic copolymer, a naphthalenesulfonic acid formalin condensate, polyoxyethylene alkyl phosphoric acid ester, polyoxyethylene alkylamine, and a pigment derivative, and the like may be used, but any dispersant known in the art may be used without limitation. Preferably, the dispersing agent may include a modified polyester dispersant, and for example, Disperbyk-111 (BYK) and Solsperse 41000 (Lubrizol), and the like may be used.

The curable composition according to one example of the present application may comprise the dispersant in

an amount of 0.1 parts by weight or more, 0.2 parts by weight or more, 0.3 parts by weight or more, 0.4 parts by weight or more, 0.5 parts by weight or more, or 0.6 parts by weight or more, or 5 parts by weight or less, 4.5 parts by weight or less, 4 parts by weight or less, 3.5 parts by weight or less, 3 parts by weight or less, 2.5 parts by weight or less, or 2 parts by weight or less, relative to 100 parts by weight of the filler component, or in a range formed by appropriately selecting the above upper and lower limits. When the content ratio of the dispersant satisfies the above range, excellent dispersibility can be secured even if the filler component in the curable composition is contained in an excessive amount.

The curable composition according to one example of the present application may further include a flame retardant or a flame-retardant auxiliary agent. The curable composition further comprising a flame retardant or a flame-retardant auxiliary agent may be cured to form a flame retardant cured product. As the flame retardant, various known flame retardants may be applied without particular limitation, and for example, a flame retardant in the form of a solid filler or a liquid flame retardant may be applied. The flame retardant includes, for example, an organic flame retardant such as melamine cyanurate or an inorganic flame retardant such as magnesium hydroxide, but is not limited thereto. When the amount of thermally conductive filler particles included in the curable composition is large, a liquid type flame retardant material (TEP, triethyl phosphate or TCPP, tris(1,3-chloro-2-propyl) phosphate, etc.) may also be used. In addition, a silane coupling agent capable of acting as a flame-retardant synergist may also be added.

The curable composition according to one example of the present application may comprise the flame retardant in an amount of 0.5 parts by weight or more, 1 part by weight or more, 1.5 parts by weight or more, 2 parts by weight or more, 2.5 parts by weight or more, or 3 parts by weight or more, or 10 parts by weight or less, 9 parts by weight or less, 8 parts by weight or less, 7 parts by weight or less, 6 parts by weight or less, 5 parts by weight or less, or 4 parts by weight or less, relative to 100 parts by weight of the filler component, or in a range formed by appropriately selecting the above upper and lower limits. When the content ratio of the flame retardant satisfies the above range, it is possible to implement excellent flame-retardant performance while ensuring excellent thermal conductivity.

The curable composition according to one example of the present application may further comprise a reaction accelerator. The reaction accelerator may perform a function of accelerating the polymerization reaction of the curable composition. The type of the reaction accelerator is not particularly limited, but for example, N,N-dimethyl-p-toluidine (DMPT) and the like may be used.

The curable composition according to one example of the present application may comprise the reaction accelerator in an amount of 0.01 parts by weight or more, 0.02 parts by weight or more, 0.03 parts by weight or more, 0.04 parts by weight or more, 0.05 parts by weight or more, 0.06 parts by weight or more, 0.07 parts by weight or more, or 0.08 parts by weight or more, or 1 part by weight or less, 0.75 parts by weight or less, 0.5 parts by weight or less, or 0.1 parts by weight or less, relative to 100 parts by weight of the filler component, or in a range formed by appropriately selecting the above upper and lower limits. When the content ratio of the reaction accelerator satisfies the above range, the polymerization reaction can be appropriately accelerated.

The curable composition according to one example of the present application may further comprise a metal catalyst, if necessary. As the metal catalyst, one or more selected from the group consisting of aluminum, bismuth, lead, mercury, tin, zinc, and zirconium may be included as a central metal element. Also, the metal catalyst may have an ester group, an ether group, or a carboxyl group bonded to the central metal element. The metal catalyst includes, for example, dibutyltin dilaurate or dimethyltin diacetate, but is not particularly limited thereto, and can be used without limitation if it is generally available in the art. In addition, as the metal catalyst, one, or two or more types may be used.

The curable composition according to one example of the present application may further comprise a crosslinking agent, if necessary. The crosslinking agent implements a crosslinking structure with the components included in the curable composition, it is possible to form a cured product having appropriate adhesion force and hardness.

As the crosslinking agent, for example, a urethane-based acrylate crosslinking agent, an aliphatic isocyanate crosslinking agent, an epoxy crosslinking agent, an aziridine crosslinking agent, and a metal chelate crosslinking agent may be used, without being limited thereto. In addition, as the crosslinking agent, one, or two or more types may be used. The urethane-based acrylate crosslinking agent is a compound having a plurality of urethane bonds (-NHCOO-) in its molecular chain and having an acrylic group capable of reacting to ultraviolet rays at the molecular terminal, which may use commercially PU330 (Miwon Commercial), PU256 (Miwon Commercial), PU610 (Miwon Commercial), and PU340 (Miwon Commercial), and the like. The aliphatic isocyanate crosslinking agent is, for example, an isocyanate compound such as isophorone diisocyanate, methylene dicyclohexyl diisocyanate or cyclohexane diisocyanate, but a derivative such as a dimer or trimer thereof may be used. As the epoxy crosslinking agent, for example, ethylene glycol diglycidyl ether, triglycidyl ether, trimethylolpropane triglycidyl ether, N,N,N',N'-tetraglycidyl ethylenediamine or glycerin diglycidyl ether, and the like may be used. As the aziridine crosslinking agent, for example, N,N'-toluene-2,4-bis(1-aziridinecarboxamide), N,N'-diphenylmethane-4,4'-bis(1-aziridinecarboxamide), triethylene melamine, bisisoprotaloyl-1-(2-methylaziridine), or tri-1-aziridinylphosphine oxide, and the like may be used. As the metal chelate crosslinking agent, for example, a metal chelate component or the like, which is a compound in which a multivalent metal such as aluminum, iron, zinc, tin, titanium, antimony, magnesium and/or vanadium is coordinated with acetyl acetone or ethyl acetoacetate, and the like, may be used.

The curable composition according to one example of the present application may further comprise a peroxide compound, if necessary. The peroxide compound may be a material that helps the curable composition undergo the polymerization reaction.

The peroxide compound may include, for example, ketone peroxide compounds such as methyl ethyl ketone peroxide (MEKP), cyclohexanone peroxide, 3,3,5-trimethylcyclohexanone peroxide, methylcyclohexanone peroxide, methylacetacetate peroxide and acetylacetone peroxide; hydroperoxide compounds such as tert-butyl hydroperoxide, cumene hydroperoxide, diisopropylbenzenehydroperoxide, paramentane hydroperoxide, 2,5-dimethylhexane-2,5-dihydroperoxide and 1,1,3,3-tetramethylbutyl hydroperoxide; diacyl peroxide compounds such as acetyl peroxide, isobutyl peroxide, octanoyl peroxide, decanoyl peroxide, laurinoyl peroxide, 3,3,5-trimethylhexanoyl peroxide, succinic acid peroxide, benzoyl peroxide, 2,4-dichlorobenzoyl peroxide and meth-toluyl peroxide; acyl peroxide compounds such as benzoyl peroxide (BPO), but is not limited thereto. In addition, one or two or more of the peroxide compounds may be used.

The curable composition according to one example of the present application may comprise a viscosity modifier, for example, a thixotropic agent, a diluent, a surface treatment agent or a coupling agent, and the like, if necessary, for controlling the viscosity, for example, increasing or decreasing the viscosity, or for controlling the viscosity according to shear force. The thixotropic agent may adjust the viscosity of the curable composition according to shear force. The usable thixotropic agent may be exemplified by fumed silica and the like. The diluent is generally used to lower the viscosity of the curable composition, and if it may exhibit such an action, various types of diluents known in the art may be used without limitation. The surface treatment agent is for surface treatment of the filler component introduced into the cured product of the curable composition, and if it may exhibit such an action, various types known in the art may be used without limitation. The coupling agent may be used, for example, to improve dispersibility of thermally conductive filler particles (e.g., alumina, etc.), if it may exhibit such an action, various types known in the art may be used without limitation.

The curable composition according to one example of the present application may be formed by mixing the above-listed components. In addition, the curable composition is not particularly limited as to the order of mixing if all necessary components can be included.

The curable composition according to one example of the present application may be prepared by adding other components such as a filler component to a resin component comprising a synthesized polymer component, and mixing them. The resin component comprising the polymer component may be a polymer syrup prepared by stopping polymerization when the solid content is within about 50 to 70% or so through a heat curing method. In addition, the curable composition may be prepared by adding a monomer component to the prepared polymer syrup to be diluted, and then adding other components such as a filler component thereto, and mixing them.

A device according to one example of the present application may be one comprising an exothermic element; and a cooling region, wherein the curable composition according to one example of the present application, or the cured product of the curable composition in thermal contact with the both is included between the exothermic element and the cooling region.

The device according to one example of the present application includes, for example, various electric and electronic products such as a clothes iron, a washing machine, a dryer, a clothes manager, an electric shaver, a microwave oven, an electric oven, an electric rice cooker, a refrigerator, a dishwasher, an air conditioner, a fan, a humidifier, an air purifier, a mobile phone, a radiotelegraph, a television, a radio, a computer and a laptop, or batteries such as a secondary battery, where the cured product of the curable composition can radiate heat generated in the device. In particular, in a battery for an electric car manufactured by gathering battery cells to form one battery module and combining several battery modules to form one battery pack, the curable composition of the present application may be used as a material for connecting the battery modules. When the curable composition of the present application is used as a material for connecting the battery modules, it may serve to dissipate heat generated in the battery cell and fix the battery cells from external shock and vibration.

The cured product of the curable composition of the present application may transfer heat generated from the exothermic element to the cooling region. That is, the cured product of the curable composition may radiate heat generated from the exothermic element.

The cured product of the curable composition may be positioned between the exothermic element and the cooling region to thermally contact them. The thermal contact means that the cured product of the curable composition is in physically direct contact with the exothermic element and the cooling region to radiate heat generated from the exothermic element to the cooling region, or even if the cured product of the curable composition is not in direct contact with the exothermic element and the cooling region (that is, there is a separate layer between the cured product of the curable composition and the exothermic element and/or the cooling region), it dissipates heat generated from the exothermic element to the cooling region.

The present application may provide a battery module. The battery module according to one example of the present application comprises a module case having a lower plate and sidewalls forming an inner space; a plurality of battery cells present in the inner space of the module case; and a resin layer present in the inner space of the module

case, where the resin layer may contact the plurality of battery cells and contact the lower plate or sidewall of the module case as well. Here, the resin layer may comprise the curable composition according to one example of the present application, or a cured product of the curable composition.

The battery module of the present application comprises a module case and a battery cell. The battery cell may be accommodated in the module case. One or more battery cells may exist in the module case, and the plurality of battery cells may be accommodated in the module case. The number of battery cells accommodated in the module case is adjusted according to the use, which is not particularly limited. The battery cells accommodated in the module case may be electrically connected to each other.

The module case may comprise at least sidewalls and a lower plate forming an inner space in which battery cells may be accommodated. The module case may further comprise an upper plate sealing the inner space. The sidewalls, lower plate, and upper plate may be integrally formed with each other, or the module case may be formed by assembling the sidewalls, lower plate, and/or upper plate which are separated from each other. The shape and size of such a module case are not particularly limited, which may be appropriately selected depending on the use, the shape and number of battery cells accommodated in the inner space, and the like.

Figure 1 is a diagram showing an exemplary module case (10), and is an example of a box-shaped case (10) including one lower plate (10a) and four sidewalls (10b). The module case (10) may further comprise an upper plate (10c) sealing the inner space.

Figure 2 is a schematic diagram of the module case (10) of Figure 1, in which the battery cells (20) are accommodated, observed from the top.

Holes may be formed in the lower plate, the sidewalls, and/or the upper plate (hereinafter, referred to as the lower plate or the like) of the module case. Such holes may be formed in the lower plate or the like in contact with a resin layer to be described below, and may be formed in the lower plate or the like in contact with the resin layer with a contact area of 80% or more, as described below. As described below, when the resin layer is formed by an injection process, the holes may be injection holes into which a material (resin composition) for forming the resin layer is injected. At this time, the shape, number, and location of the holes may be adjusted in consideration of the injection efficiency of the forming material of the resin layer. In one example, the holes may be formed in at least the lower plate.

In one example, the hole may be formed at about 1/4 to 3/4 point, about 3/8 to 7/8 point, or approximately at the middle part of the total length of the sidewalls, the lower plate or the upper plate. By injecting the resin composition through the injection hole formed at this point, it can be injected so that the resin layer has a wide contact area. As shown in Figure 3, the 1/4, 3/4, 3/8 or 7/8 point is, for example, the ratio of the distance (A) to the formation position of the hole relative to the total length (L) measured based on any one end surface (E) of the lower plate or the like. Here, the end (E) where the length (L) and the distance (A) are formed may also be any end (E) if the length (L) and the distance (A) are measured from the same end (E). In Figure 3, the injection hole (50a) is in a shape located approximately at the middle part of the lower plate (10a).

The size and shape of the injection hole are not particularly limited, which may be formed in consideration of the injection efficiency of the resin layer material to be described below. For example, the hole may be in the form of a circle, polygonal or amorphous, such as a circle, an oval, a polygon such as a triangle or a tetragon, or amorphism. The number of injection holes and their spacing are not highly limited, which may be adjusted such that the resin layer has a large contact area with the lower plate, as described above.

Observation holes (for example, 50b in Figure 3) may be formed at ends of the lower plate or the like in which the injection holes are formed. Such an observation hole may be for observing whether the injected material is well injected to the end of the relevant sidewall, lower plate, or upper plate, for example, when the resin layer material is injected through the injection hole. The position, shape, size and number of the observation holes are not limited as long as they are formed such that it can be confirmed whether the injected material is properly injected.

The module case may be a thermally conductive case. The term thermally conductive case means a case having a thermal conductivity of 10 W/mk or more in the entire case, or including a portion having at least the same thermal conductivity as above. For example, at least one of the above-described sidewalls, lower plate and upper plate may have the above-described thermal conductivity. In another example, at least one of the sidewalls, lower plate and upper plate may comprise a portion having the thermal conductivity. Here, in another example, the thermal conductivity may be about 20 W/mk or more, 30 W/mk or more, 40 W/mk or more, 50 W/mk or more, 60 W /mk or more, 70 W/mk or more, 80 W/mk or more, 90 W/mk or more, 100 W/mk or more, 110 W/mk or more, 120 W/mk or more, 130 W/mk or more, 140 W/mk or more, 150 W/mk or more, 160 W/mk or more, 170 W/mk or more, 180 W/mk or more, 190 W/mk or more, or 195 W/mk or more. The higher the value of the thermal conductivity, the more advantageous it is in terms of heat dissipation characteristics of the module, whereby the upper limit is not particularly limited. In one example, the thermal conductivity may be about 1,000 W/mK or less, 900 W/mk or less, 800 W/mk or less, 700 W/mk or less, 600 W/mk or less, 500 W/mk or less, 400 W/mk or less, 300 W/mk or 250 W/mK or less, but is not limited thereto. The type of material exhibiting the above thermal conductivity is not particularly limited, and for example, includes metal materials such as aluminum, gold, pure silver, tungsten, copper, nickel, or platinum. The module case may be entirely made of

the thermally conductive material as above, or at least a portion may be a portion made of the thermally conductive material. Accordingly, the module case may have a thermal conductivity in the above-mentioned range or comprise at least portions having the above-mentioned thermal conductivity.

In the module case, a portion having the thermal conductivity in the above range may be a portion in contact with a resin layer and/or an insulating layer to be described below. In addition, the portion having the thermal conductivity may be a portion in contact with a cooling medium such as cooling water. According to this structure, a structure capable of effectively dissipating heat generated from the battery cells to the outside can be implemented.

The type of the battery cell housed in the module case is not particularly limited, and a variety of known battery cells may be applied. In one example, the battery cell may be a pouch type. Referring to Figure 4, the pouch type battery cell (100) may typically comprise an electrode assembly, an electrolyte, and a pouch exterior material.

Figure 4 is an exploded perspective view schematically showing the configuration of an exemplary pouch type cell, and Figure 5 is a combined perspective view of the configuration of Figure 4.

The electrode assembly (110) included in the pouch type cell (100) may be in a form in which at least one positive plate and at least one negative plate are disposed with each separator interposed therebetween. The electrode assembly (110) may be a wound type in which one positive plate and one negative plate are wound together with the separator, or a stacked type in which a plurality of positive plates and a plurality of negative plates are laminated alternately with each separator interposed therebetween.

The pouch exterior material (120) may be configured in a form equipped with, for example, an outer insulating layer, a metal layer, and an inner adhesive layer. Such an exterior material (120) may comprise a metal thin film, such as aluminum, to protect inner elements such as the electrode assembly (110) and the electrolyte, to complement the electrochemical properties by the electrode assembly (110) and the electrolyte, and to consider heat dissipation or the like. Such a metal thin film may be interposed between insulating layers formed of an insulating material in order to ensure electrical insulation with elements such as the electrode assembly (110) and the electrolyte, or other elements outside the battery (100).

In one example, the exterior material (120) may comprise an upper pouch (121) and a lower pouch (122), where in at least one of the upper pouch (121) and the lower pouch (122), a concave internal space (I) can be formed. The electrode assembly (110) can be housed in the internal space (I) of this pouch. A sealing part (S) is provided on each outer peripheral surface of the upper pouch (121) and the lower pouch (122) and these sealing parts (S) are bonded to each other so that the internal space accommodating the electrode assembly (110) can be sealed.

Each electrode plate of the electrode assembly (110) is provided with an electrode tab, and one or more electrode tabs may be connected to an electrode lead. The electrode lead may be interposed between the sealing parts (S) of the upper pouch (121) and the lower pouch (122) and exposed to the outside of the exterior material (120) to function as an electrode terminal of the secondary battery (100).

The shape of the pouch type cell is one example, and the battery cell applied in the present application is not limited to the above-described kind. In the present application, various shapes of known pouch type cells or other types of cells can be all applied as battery cells.

The battery module of the present application may comprise a resin layer. In the present application, the term resin layer is a layer comprising a resin component, and in one example, the resin layer may also be an adhesive layer. In one example, the battery module comprises the case and the battery cells, which may be in contact with any one of the sidewall, lower plate, or upper plate of the case. Here, the resin layer may comprise the curable composition according to one example of the present application, or a cured product of the curable composition.

At this time, the sidewall, lower plate, or upper plate in contact with the resin layer may be the above-described thermally conductive sidewall, lower plate, or upper plate. Meanwhile, here, the contact means the thermal contact, and in the contact, it may mean a state where the resin layer is in direct contact with the lower plate or the like, or another element between the resin layer and the lower plate or the like, for example, an insulating layer or the like to be described below is present, but another element does not hinder the transfer of heat from the resin layer to the lower plate or the like. Here, the matter that it does not hinder the transfer of heat means a case that even when another element (e.g., an insulating layer or a guiding part to be described below) exists between the resin layer and the lower plate or the like, the total thermal conductivity of another element and the resin layer is about 2 W/mK or more, 2.5 W/mK or more, 3 W/mK or more, 3.5 W/mK or more, or 4 W/mK or more, or the total thermal conductivity of the resin layer and the lower plate or the like in contact therewith is included in the range even when another element is present. The thermal conductivity of the thermal contact may be 50 W/mk or less, 45 W/mk or less, 40 W/mk or less, 35 W/mk or less, 30 W/mk or less, 25 W/mk or less, 20 W/mk or less, 15 W/mk or less, 10 W/mK or less, 5 W/mK or less, 4.5 W/mK or less, or about 4.0 W/mK or less. When another element is present, such thermal contact can be achieved by controlling the thermal conductivity and/or thickness of another element.

The resin layer may be in contact with the lower plate or the like, and may also be in contact with the battery cell. The contact between the battery cell and the resin layer is also the above-described thermal contact. By employing the above structure, the present application can realize the module in which more battery cells per unit volume are

housed therein, while securing the heat dissipation characteristics as well as greatly reduces various fastening parts or module cooling equipment and the like conventionally required upon constructing a general battery module or a battery pack as an assembly of such modules. Accordingly, the present application can provide a battery module that is smaller, lighter, and has higher power.

Figures 6 and 7 are exemplary cross-sectional diagrams of the battery module, and for example, the module may be in a form which comprises a case (10) including sidewalls (10b) and a lower plate (10a); a plurality of battery cells (20) housed inside the case and a resin layer (30) in contact (thermal contact) with both the battery cell (20) and the case (10), as shown in Figures 6 and 7.

In the above structure, the lower plate or the like in contact with the resin layer (30) may be the thermally conductive lower plate or the like as described above.

The contact area between the resin layer and the lower plate or the like may be about 70% or more, about 75% or more, about 80% or more, about 85% or more, about 90% or more, or about 95% or more, relative to the total area of the lower plate or the like. The upper limit of the contact area is not particularly limited, and may be, for example, 100% or less, or less than about 100%. When the lower plate or the like includes a thermally conductive portion, the contact area may be a contact area for the thermally conductive portion, that is, a ratio over the total area of the thermally conductive portion.

As described above, the thermally conductive portion or the thermally conductive lower plate or the like may be a portion in contact with a cooling medium such as cooling water. That is, as schematically shown in Figure 6, the heat (H) can be easily discharged to the lower plate or the like by the above structure, and heat release can be easily performed even in more simplified structures by contacting this lower plate or the like with the cooling medium (CW).

The resin layer (30) may be in the form of a relatively thin layer as shown in Figure 6, or may be filled in the internal space of the case (10) as shown in Figure 7. In this case, the battery cell (20) may be present in a state inserted into the resin layer. In the case of the structure shown in Figure 6, the thickness of the resin layer can be, for example, in the range of about 100 $\mu$m to 5 mm or in the range of about 200 $\mu$m to 5 mm. In the structure of the present application, if the resin layer is thin, it is advantageous in heat dissipation characteristics, and if it is thick, it is advantageous in insulating properties to be described below, so that the appropriate thickness can be set in consideration of this point. The thickness may be the thickness of the thinnest portion of the resin layer, the thickness of the thickest portion, or the average thickness.

As shown in Figure 6 or 7, a guiding part (10d) which can guide the housed battery cell (20) may also be present on at least one surface of the inside of the module case (10), for example, a surface (10a) in contact with the resin layer (30). At this time, the shape of the guiding part (10d) is not particularly limited, and an appropriate shape can be employed in consideration of the shape of the battery cell to be applied, where the guiding part (10d) may be integrally formed with the lower plate or the like, or may be attached separately thereto. The guiding part (10d) may be formed using a thermally conductive material, for example, a metallic material such as aluminum, gold, pure silver, tungsten, copper, nickel, or platinum in consideration of the above-described thermal contact. In addition, although not shown in the drawings, an interleaf or an adhesive layer may also be present between the housed battery cells (20). Here, the interleaf can act as a buffer upon charging and discharging the battery cell.

The resin layer or the battery module to which the resin layer is applied may have properties according to the physical properties of the curable composition of the present application and the cured product of the curable composition. Particularly, the resin layer of the battery module may have the same physical properties as physical properties of the curable composition of the present application and the cured product of the curable composition.

In one example, the battery module may further comprise an insulating layer between the module case and the battery cell or between the resin layer and the module case. Figure 8 is an example in which the insulating layer (40) is formed between the resin layer (30) and the guiding part (10d) formed on the lower plate (10c) of the case. By adding an insulating layer, it is possible to prevent problems such as an electrical short phenomenon or a fire due to a contact between the cell and the case by an impact that may occur during use. The insulating layer may be formed using an insulating sheet having high insulation and thermal conductivity, or may be formed by applying or injecting a material exhibiting insulating properties. For example, in the method of manufacturing a battery module as described below, a process of forming an insulating layer may be performed before the injection of the resin composition. A so-called TIM (Thermal Interface Material) or the like may be applied in forming the insulating layer. Alternatively, the insulating layer may be formed of an adhesive material, and for example, the insulating layer may also be formed using a resin layer having little or no filler such as thermally conductive fillers. As the resin component which can be used for forming the insulating layer, an acrylic resin, PVC (poly(vinyl chloride)), an olefin resin such as PE (polyethylene), an epoxy resin, silicone or a rubber component such as an EPDM (ethylene propylene diene monomer) rubber, and the like can be exemplified, without being limited thereto. The insulating layer may have an insulation breakdown voltage, as measured according to ASTM D149, of about 5 kV/mm or more, about 10 kV/mm or more, about 15 kV/mm or more, 20 kV/mm or more, 25 kV/mm or more, or 30 kV/mm or more. The higher the value of the insulation breakdown voltage is, the better the insulation shows, and thus it is not particularly limited. For example, the insulation breakdown voltage of the

insulating layer may be about 100 kV/mm or less, 90 kV/mm or less, 80 kV/mm or less, 70 kV/mm or less, or 60 kV/mm or less. The thickness of the insulating layer can be set to an appropriate range in consideration of the insulating property and the thermal conductivity of the insulating layer, and the like, and for example, may be about 5 μm or more, 10 μm or more, 20 μm or more, 30 μm or more, 40 μm or more, 50 μm or more, 60 μm or more, 70 μm or more, 80 μm or more, or 90 μm or more or so. In addition, the upper limit of the thickness is not particularly limited and may be, for example, about 1 mm or less, about 200 μm or less, 190 μm or less, 180 μm or less, 170 μm or less, 160 μm or less, or 150 μm or less.

The present application also relates to a method for manufacturing a battery module, for example, the above-mentioned battery module.

The manufacturing method of the present application may comprise steps of injecting a resin composition into the above-described module case; housing a battery cell in the module case, and curing the resin composition to form the resin layer. Here, the resin composition means a composition forming a resin layer of the battery module, which may be a curable composition according to one example of the present application.

The order of the step of injecting the resin composition into the module case and the step of housing the battery cell in the module case is not particularly limited. For example, the resin composition may be first injected into the module case, followed by housing the battery cell in that state, or the battery cell may be first housed inside the module case, followed by injecting the resin composition therein.

The method of injecting the resin composition into the module case is not particularly limited, and a known method can be applied. For example, a resin composition may be injected by pouring the resin composition into an opening of a module case, or a method of injecting a resin composition by the above-described injection port formed on a module case, a method of applying a resin composition to both a battery cell and a battery module, and the like may be applied. For proper fixing, the injection process may also be performed while constantly vibrating the battery module or the battery cell.

The manner, in which the battery cell is housed in the module case into which the resin composition is injected or in the module case before the composition is injected, is not particularly limited.

The housing of the battery cells can be performed by arranging the battery cells at suitable positions in the module case in consideration of the desired arrangement and the like. In addition, when the cartridge structure is present, the step can be performed by placing the battery cells at proper positions of the cartridge structure, or inserting the cartridge structure, in which the battery cells are located, into the module case.

After the battery cells are housed therein, adhesion between the battery cells or adhesion between the battery cells and the module case can be achieved by curing the injected resin composition. The method of curing the resin composition is not particularly limited, but may follow the method of curing the curable composition according to one example of the present application.

The present application also relates to a battery pack, for example, a battery pack comprising two or more battery modules as described above. In the battery pack, the battery modules may be electrically connected to each other. A method of electrically connecting two or more battery modules to constitute a battery pack is not particularly limited, and all known methods can be applied thereto.

The present application also relates to a device comprising the battery module or the battery pack. An example of such a device may include, but is not limited to, automobiles such as electric vehicles, where all applications requiring secondary batteries as power may be included. For example, a method of configuring the automobile using the battery module or the battery pack is not particularly limited, and a general method can be applied.

### Advantageous Effects

The present application has improved the conventional problems, which can provide a curable composition capable of fast curing at a relatively low temperature compared to the conventional technology.

Also, the present application can provide a curable composition capable of forming a cured product having an excellent heat dissipation effect, appropriate adhesive performance, and excellent hardness.

In addition, the present application can provide a battery pack to which the curable composition is applied, and a device comprising the battery pack.

### Description of Drawings

Figure 1 is a diagram showing an exemplary module case that may be applied in the present application.

Figure 2 is a diagram showing a form in which battery cells are housed in a module case.

Figure 3 is a diagram of an exemplary lower plate in which injection holes and observation holes are formed.

Figures 4 and 5 are diagrams showing an exemplary battery pouch that may be used as a battery cell.

Figures 6 to 8 are diagrams showing the structure of an exemplary battery module.

**Best Mode**

Hereinafter, the present invention will be described through examples and comparative examples, but the scope of the present invention is not limited due to the contents presented below.

**Example 1.**

To a flask equipped with a mechanical stirrer, 2-ethylhexyl acrylate (2-EHA), isobornyl acrylate (IBoA), and 2-hydroxyethyl methacrylate (2-HEMA) were added in a weight ratio of 60:25:15 (2-EHA: IBoA: 2-HEMA). 0.03 wt% or so of 2,2-azobisisobutyronitrile (AIBN) relative to the total weight of the compounds added to the flask was further added to the flask, and then the mixture was stirred in a state where the temperature was raised to about 80°C under a normal pressure condition, and then maintained at 80°C for about 4 hours, and subjected to partial polymerization to obtain a partial polymerization reaction product ($R_1$) comprising an acrylic polymer component ($A_P$) (solid content: about 61 wt%). At this time, the prepared acrylic polymer component ($A_P$) had a weight average molecular weight (Mw) of about 62,500 g/mol and a polydispersity index (PDI) of about 1.42 or so.

In the partial polymerization reaction product ($R_1$), 2-hydroxyethyl acrylate (2-HEA) was placed and diluted to prepare a dilution product ($D_i$). At this time, the 2-hydroxyethyl acrylate (2-HEA) was added to about 40 parts by weight relative to 100 parts by weight of the reaction product ($R_1$).

Then, the prepared dilution product (D;), a filler component (F), a dispersant (D), a plasticizer (P), a flame retardant (N), a photoinitiator (Iu), a thermal initiator ($I_H$), a sensitizer ($S_e$) and an accelerator ($A_c$) were added to a paste mixer in a weight ratio of 14:158.7:1:1:5:0.38:0.25:0.13:0.13 (Di: F: D: P: N: Iu: $I_R$: $S_e$: $A_c$) and stirred to prepare a curable composition having a viscosity of about 150,000 to 200,000 cPs or so as measured at 25°C and 60 rpm.

Here, as the filler component (F), a mixture obtained by mixing spherical alumina (F11) having an average particle size of 70 $\mu$m, plate-like alumina (F12) having an average particle size of 50 $\mu$m, and aluminum hydroxide (F13) having an average particle size of 8 $\mu$m in a weight ratio of 4:2:4 (F11: F12: F13) was used.

In addition, as the photoinitiator (IU), a mixture obtained by mixing a cationic initiator ($I_P$) and a radical initiator ($I_R$) in a weight ratio of 1:0.52 ($I_P$: $I_R$) was used. As the cationic initiator ($I_P$), Irgacure-250 (I-250) commercially available from BASF was used, and as the radical initiator ($I_R$), Irgacure-819 (I-819) commercially available from BASF was used. Specifically, the I-250 is (4-methylphenyl)[4-(2-methylpropyl)phenyl]iodonium hexafluorophosphate, and the I-819 is diphenyl(2,4,6-trimethylbenzoyl)-phosphine oxide.

As the thermal initiator ($I_H$), 2,2-azobisisobutyronitrile (AIBN) was used. The used thermal initiator had a 10-hour half-life temperature (solvent: toluene) of about 65°C or so.

As the dispersant (D), Disperbyk-111 product, a modified polyester dispersant commercially available from BYK, was used. As the plasticizer (P), diisononyl adipate (DINA) commercially available from Aekyung Chemical was used. As the flame retardant (N), FR-119L product, a phosphorus-based flame retardant commercially available from Campia, was used. As the sensitizer ($S_e$), 2,4-diethyl-9H-thioxanthen-9-one (DETX) was used. As the accelerator ($A_c$), N,N-dimethyl-p-toluidine (DMPT) was used.

**Example 2.**

To a flask equipped with a mechanical stirrer, 2-ethylhexyl acrylate (2-EHA), ethoxyethylene glycolacrylate (EOEOEA), and 2-hydroxyethyl methacrylate (2-HEMA) were added in a weight ratio of 60:25:15 (2-EHA: EOEOEA: 2-HEMA). 0.03 wt% or so of 2,2-azobisisobutyronitrile (AIBN) relative to the total weight of the compounds added to the flask was further added to the flask, and then the mixture was stirred in a state where the temperature was raised to about 80°C under a normal pressure condition, and then maintained at 80°C for about 4 hours, and subjected to partial polymerization to obtain a partial polymerization reaction product ($R_1$) comprising an acrylic polymer component ($A_P$) (solid content: about 65 wt%). At this time, the prepared acrylic polymer component ($A_P$) had a weight average molecular weight (Mw) of about 60,500 g/mol and a polydispersity index (PDI) of about 1.32 or so.

In the partial polymerization reaction product ($R_1$), 2-hydroxyethyl acrylate (2-HEA) was placed and diluted to prepare a dilution product ($D_i$). At this time, the 2-hydroxyethyl acrylate (2-HEA) was added to about 40 parts by weight relative to 100 parts by weight of the reaction product ($R_1$).

Then, the prepared dilution product (D;), a filler component (F), a dispersant (D), a plasticizer (P), a flame

retardant (N), a photoinitiator (Iu), a thermal initiator ($I_H$), a sensitizer ($S_e$) and an accelerator ($A_c$) were added to a paste mixer in a weight ratio of 14:158.7:1:1:5:0.38:0.25:0.13:0.13 (Di: F: D: P: N: Iu: $I_R$: $S_e$: $A_c$) and stirred to prepare a curable composition having a viscosity of about 150,000 to 200,000 cPs or so as measured at 25°C and 60 rpm. Here, the same filler component (F), dispersant (D), plasticizer (P), flame retardant (N), photoinitiator (Iu), thermal initiator ($I_H$), sensitizer ($S_e$), and accelerator ($A_c$) as in Example 1 above were used.

**Example 3.**

To a flask equipped with a mechanical stirrer, 2-ethylhexyl acrylate (2-EHA), 2-hydroxyethyl acrylate (2-HEA), and 2-hydroxyethyl methacrylate (2-HEMA) were added in a weight ratio of 60:25:15 (2-EHA: 2-HEA: 2-HEMA). 0.03 wt% or so of 2,2-azobisisobutyronitrile (AIBN) relative to the total weight of the compounds added to the flask was further added to the flask, and then the mixture was stirred in a state where the temperature was raised to about 80°C under a normal pressure condition, and then maintained at 80°C for about 4 hours, and subjected to partial polymerization to obtain a partial polymerization reaction product ($R_1$) comprising an acrylic polymer component ($A_P$) (solid content: about 63 wt%). At this time, the prepared acrylic polymer component ($A_P$) had a weight average molecular weight (Mw) of about 71,500 g/mol and a polydispersity index (PDI) of about 1.54 or so.

In the partial polymerization reaction product ($R_1$), 2-hydroxyethyl acrylate (2-HEA) was placed and diluted to prepare a dilution product ($D_i$). At this time, the 2-hydroxyethyl acrylate (2-HEA) was added to about 40 parts by weight relative to 100 parts by weight of the reaction product ($R_1$).

Then, the prepared dilution product (D;), a filler component (F), a dispersant (D), a plasticizer (P), a flame retardant (N), a photoinitiator (Iu), a thermal initiator ($I_H$), a sensitizer ($S_e$) and an accelerator ($A_c$) were added to a paste mixer in a weight ratio of 14:158.7:1:1:5:0.38:0.25:0.13:0.13 (Di: F: D: P: N: Iu: $I_R$: $S_e$: $A_c$) and stirred to prepare a curable composition having a viscosity of about 150,000 to 200,000 cPs or so as measured at 25°C and 60 rpm. Here, the same filler component (F), dispersant (D), plasticizer (P), flame retardant (N), photoinitiator (Iu), thermal initiator ($I_H$), sensitizer ($S_e$), and accelerator ($A_c$) as in Example 1 above were used.

**Example 4.**

To a flask equipped with a mechanical stirrer, 2-ethylhexyl acrylate (2-EHA), acrylamide (AAM), , and 2-hydroxyethyl methacrylate (2-HEMA) were added in a weight ratio of 60:25:15 (2-EHA: AAM: 2-HEMA). 0.03 wt% or so of 2,2-azobisisobutyronitrile (AIBN) relative to the total weight of the compounds added to the flask was further added to the flask, and then the mixture was stirred in a state where the temperature was raised to about 80°C under a normal pressure condition, and then maintained at 80°C for about 4 hours, and subjected to partial polymerization to obtain a partial polymerization reaction product ($R_1$) comprising an acrylic polymer component ($A_P$) (solid content: about 63 wt%). At this time, the prepared acrylic polymer component ($A_P$) had a weight average molecular weight (Mw) of about 75,200 g/mol and a polydispersity index (PDI) of about 1.21 or so.

In the partial polymerization reaction product ($R_1$), 2-hydroxyethyl acrylate (2-HEA) was placed and diluted to prepare a dilution product ($D_i$). At this time, the 2-hydroxyethyl acrylate (2-HEA) was added to about 40 parts by weight relative to 100 parts by weight of the reaction product ($R_1$).

Then, the prepared dilution product (D;), a filler component (F), a dispersant (D), a plasticizer (P), a flame retardant (N), a photoinitiator (Iu), a thermal initiator ($I_H$), a sensitizer ($S_e$) and an accelerator ($A_c$) were added to a paste mixer in a weight ratio of 14:158.7:1:1:5:0.38:0.25:0.13:0.13 (Di: F: D: P: N: Iu: $I_R$: $S_e$: $A_c$) and stirred to prepare a curable composition having a viscosity of about 150,000 to 200,000 cPs or so as measured at 25°C and 60 rpm. Here, the same filler component (F), dispersant (D), plasticizer (P), flame retardant (N), photoinitiator (Iu), thermal initiator ($I_H$), sensitizer ($S_e$), and accelerator ($A_c$) as in Example 1 above were used.

**Example 5.**

To a flask equipped with a mechanical stirrer, 2-ethylhexyl acrylate (2-EHA), acrylic acid (AA), and 2-hydroxyethyl methacrylate (2-HEMA) were added in a weight ratio of 60:25:15 (2-EHA: AA: 2-HEMA). 0.03 wt% or so of 2,2-azobisisobutyronitrile (AIBN) relative to the total weight of the compounds added to the flask was further added to the flask, and then the mixture was stirred in a state where the temperature was raised to about 80°C under a normal pressure condition, and then maintained at 80°C for about 4 hours, and subjected to partial polymerization to obtain a partial polymerization reaction product ($R_1$) comprising an acrylic polymer component ($A_P$) (solid content: about 69 wt%). At this time, the prepared acrylic polymer component ($A_P$) had a weight average molecular weight (Mw) of about 69,000 g/mol and a polydispersity index (PDI) of about 1.85 or so.

In the partial polymerization reaction product ($R_1$), 2-hydroxyethyl acrylate (2-HEA) was placed and diluted to prepare a dilution product ($D_i$). At this time, the 2-hydroxyethyl acrylate (2-HEA) was added to about 40 parts by weight

relative to 100 parts by weight of the reaction product ($R_1$).

Then, the prepared dilution product (D;), a filler component (F), a dispersant (D), a plasticizer (P), a flame retardant (N), a photoinitiator (Iu), a thermal initiator ($I_H$), a sensitizer ($S_e$) and an accelerator ($A_c$) were added to a paste mixer in a weight ratio of 14:158.7:1:1:5:0.38:0.25:0.13:0.13 (Di: F: D: P: N: Iu: $I_R$: $S_e$: $A_c$) and stirred to prepare a curable composition having a viscosity of about 150,000 to 200,000 cPs or so as measured at 25°C and 60 rpm. Here, the same filler component (F), dispersant (D), plasticizer (P), flame retardant (N), photoinitiator (Iu), thermal initiator ($I_H$), sensitizer ($S_e$), and accelerator ($A_c$) as in Example 1 above were used.

**Comparative Example 1.**

To a flask equipped with a mechanical stirrer, 2-ethylhexyl acrylate (2-EHA), isobornyl acrylate (IBoA), and 2-hydroxyethyl methacrylate (2-HEMA) were added in a weight ratio of 60:25:15 (2-EHA: IBoA: 2-HEMA). 0.03 wt% or so of 2,2-azobisisobutyronitrile (AIBN) relative to the total weight of the compounds added to the flask was further added to the flask, and then the mixture was stirred in a state where the temperature was raised to about 80°C under a normal pressure condition, and then maintained at 80°C for about 4 hours, and subjected to partial polymerization to obtain a partial polymerization reaction product ($R_1$) comprising an acrylic polymer component ($A_P$) (solid content: about 61 wt%). At this time, the prepared acrylic polymer component ($A_P$) had a weight average molecular weight (Mw) of about 65,500 g/mol and a polydispersity index (PDI) of about 1.51 or so.

In the partial polymerization reaction product ($R_1$), 2-hydroxyethyl acrylate (2-HEA) was placed and diluted to prepare a dilution product ($D_i$). At this time, the 2-hydroxyethyl acrylate (2-HEA) was added to about 40 parts by weight relative to 100 parts by weight of the reaction product ($R_1$).

Then, the prepared dilution product (D;), a filler component (F), a dispersant (D), a plasticizer (P), a flame retardant (N), a photoinitiator (Iu), a thermal initiator ($I_H$), a sensitizer ($S_e$) and an accelerator ($A_c$) were added to a paste mixer in a weight ratio of 14:21.64:1:1:5:0.38:0.25:0.13:0.13 (Di: F: D: P: N: Iu: $I_R$: $S_e$: $A_c$) and stirred to prepare a curable composition having a viscosity of about 70,000 cPs or so as measured at 25°C and 60 rpm. Here, the same filler component (F), dispersant (D), plasticizer (P), flame retardant (N), photoinitiator (Iu), thermal initiator ($I_H$), sensitizer ($S_e$), and accelerator ($A_c$) as in Example 1 above were used.

**Comparative Example 2.**

In the reaction product ($R_1$) prepared in Example 1 above, 2-hydroxyethyl acrylate (2-HEA) was placed and diluted to prepare a dilution product (Di). At this time, the 2-hydroxyethyl acrylate (2-HEA) was added to about 40 parts by weight relative to 100 parts by weight of the reaction product ($R_1$).

Then, the prepared dilution product (Di), a filler component (F), a dispersant (D), a plasticizer (P), a flame retardant (N), a photoinitiator (Iu), a sensitizer ($S_e$) and an accelerator ($A_c$) were added to a paste mixer in a weight ratio of 14:158.7:1:1:5:0.38:0.13:0.13 (Di: F: D: P: N: Iu: $S_e$: $A_c$) and stirred to prepare a composition. Here, the same filler component (F), dispersant (D), plasticizer (P), flame retardant (N), sensitizer ($S_e$), and accelerator ($A_c$) as in Example 1 above were used. In addition, only a cationic initiator ($I_P$) was applied as the photoinitiator (Iu), and Irgacure-250 (I-250) commercially available from BASF was used as the cationic initiator ($I_P$). The I-250 is (4-methylphenyl)[4-(2-methylpropyl)phenyl]iodonium hexafluoro phosphate.

**Comparative Example 3.**

In the reaction product ($R_1$) prepared in Example 1 above, 2-hydroxyethyl acrylate (2-HEA) was placed and diluted to prepare a dilution product (Di). At this time, the 2-hydroxyethyl acrylate (2-HEA) was added to about 40 parts by weight relative to 100 parts by weight of the reaction product ($R_1$).

Then, the prepared dilution product (Di), a filler component (F), a dispersant (D), a plasticizer (P), a flame retardant (N), a photoinitiator (Iu), a sensitizer ($S_e$) and an accelerator ($A_c$) were added to a paste mixer in a weight ratio of 14:158.7:1:1:5:0.38:0.13:0.13 (Di: F: D: P: N: Iu: $S_e$: $A_c$) and stirred to prepare a composition. Here, the same filler component (F), dispersant (D), plasticizer (P), flame retardant (N), sensitizer ($S_e$), and accelerator ($A_c$) as in Example 1 above were used. In addition, only a radical initiator ($I_R$) was applied as the photoinitiator (Iu), and Irgacure-819 (I-819) commercially available from BASF was used as the radical initiator ($I_R$). The I-819 is diphenyl(2,4,6-trimethylbenzoyl)-phosphine oxide.

**Comparative Example 4.**

In the reaction product ($R_1$) prepared in Example 1 above, 2-hydroxyethyl acrylate (2-HEA) was placed and diluted to prepare a dilution product (Di). At this time, the 2-hydroxyethyl acrylate (2-HEA) was added to about 40 parts

by weight relative to 100 parts by weight of the reaction product ($R_1$).

Then, the prepared dilution product (Di), a filler component (F), a dispersant (D), a plasticizer (P), a flame retardant (N), a thermal initiator ($I_H$), a sensitizer ($S_e$) and an accelerator ($A_c$) were added to a paste mixer in a weight ratio of 14:158.7:1:1:5:0.25:0.13:0.13 (Di: F: D: P: N: $I_H$: $S_e$: $A_c$) and stirred to prepare a composition. Here, the same filler component (F), dispersant (D), plasticizer (P), flame retardant (N), sensitizer ($S_e$), and accelerator ($A_c$) as in Example 1 above were used. In addition, 2,2-azobisisobutyronitrile (AIBN) was used as the thermal initiator ($I_H$). The used thermal initiator had a 10-hour half-life temperature (solvent: toluene) of about 65°C or so.

Physical properties presented in this specification can be specifically measured or evaluated by the following methods. In addition, data on the following physical properties are measured or evaluated by the following methods.

**<Physical property measurement methods>**

**1. Shore A hardness**

After applying a curable composition on a glass surface to have a thickness of about 2 mm, the applied curable composition was irradiated with ultraviolet rays for about 3 minutes or so by a UV curing machine (Black light, 1.5 J/$cm^2$), and then left at about 50°C for 30 minutes, to form a cured product.

Regarding the hardness of the surface of the cured product, the Shore A hardness was measured at 25°C according to ASTM D2240 standard using a hardness meter. Specifically, the surface of the cured product in a flat state was stabbed with an indenter capable of measuring the Shore A hardness of the hardness meter (manufacturer: TQC Sheen, product name: LD0550), and when the stabbing force was maintained, a hardness value appearing on the hardness meter was measured.

**2. Adhesion force**

After applying a curable composition on a glass plate to have a width of about 5cm, a length of about 10cm, and a thickness of about 2 mm or so, an aluminum pouch having a PET (poly(ethylene terephthalate) interface with a width of 1 cm, a length of 20 cm, and a thickness of 150 μm or so was attached thereon. The aluminum pouch was used upon manufacturing a battery cell, and attached so that the PET interface and the applied curable composition were in contact with each other. Thereafter, the applied curable composition was irradiated with ultraviolet rays for about 3 minutes or so by a UV curing machine (Black light, 1.5 J/$cm^2$), and then left at about 50°C for 30 minutes and cured, and then the adhesion force was measured while peeling the aluminum pouch at 25°C with a peel rate of about 0.3 mm/s and a peel angle of 180 degrees by a physical property tester (manufacturer: stable micro systems, Taxture analyzer).

**3. Thermal conductivity**

The thermal conductivity was measured using a hot disk method. Specifically, a curable composition was placed in a disk-shaped mold with a diameter of 2 cm and a thickness of 2 mm, and the curable composition was irradiated with ultraviolet rays for about 3 minutes or so by a UV curing machine (Black light, 1.5 J/$cm^2$), and then left at about 50°C for 30 minutes to form a cured product in the form of a disk, and then the thermal conductivity was measured by a thermal constant analyzer according to ISO 22007-2 standard along the thickness direction of the cured product.

**4. Glass transition temperature**

The glass transition temperature ($T_g$) was measured using a differential scanning calorimeter (DSC) according to ISO 1135762. Specifically, while slowly raising a temperature of a sample at a constant rate with the differential scanning calorimeter, a graph of the relationship between the temperature of the sample and the supplied heat flow is obtained, and in the part where the slope of the graph changes rapidly, the glass transition temperature can be obtained through the part to meet the graph upon connecting extension lines to the graphs before and after the change, and then connecting the two extension lines. Here, the sample is a reaction product ($R_1$).

**5. Particle average particle diameter**

The particle average particle diameter of each filler included in the filler component is the D50 particle diameter of the filler, which is a particle diameter measured by Marvern's MASTERSIZER3000 equipment in accordance with ISO-13320 standard. Upon the measurement, distilled water was used as a solvent. The incident laser is scattered by the fillers dispersed in the solvent, and the values of the intensity and directionality of the scattered laser vary depending

on the size of the filler, which are analyzed using the Mie theory, whereby the D50 particle diameter can be obtained. Through the above analysis, the distribution can be obtained through conversion to the diameter of a sphere having the same volume as the dispersed fillers, and the particle diameter can be evaluated by obtaining the D50 value, which is the median value of the distribution.

**6. Weight average molecular weight and polydispersity index (PDI)**

The weight average molecular weight (Mw) was measured using GPC (Gel permeation chromatography). Specifically, the weight average molecular weight (Mw) was measured by adding a sample to be analyzed into a 20 mL vial, diluting it with a THF (tetrahydrofuran) solvent to a concentration of about 20 mg/mL, and then filtering a standard sample for calibration and the analysis sample through a syringe filter (pore size: 0.2 μm). Agilent technologies' Chem-Station is used as an analysis program, and the weight average molecular weight (Mw) can be obtained by comparing the elution time of the sample with the calibration curve. The number average molecular weight (Mn) can also be obtained in the same manner as the weight average molecular weight (Mw), and the polydispersity index (PDI) can be obtained as a value that the measured weight average molecular weight ($M_w$) is divided by the number average molecular weight ($M_n$).

<GPC measurement conditions>

Instrument: Agilent technologies' 1200 series

Column: using Agilent technologies' TL Mix. A & B

Solvent: THF

Column temperature: 40°C

Sample concentration: 20 mg/mL, 10 μl injection

MP: 364000, 91450, 17970, 4910, 1300 used as standard samples

The results of the measured test data were summarized in Table 1 below.

[Table 1]

| Classification | | Shore A hardness | Adhesion force (gf/ 10mm) | Thermal conductivity (W/mK) | Glass transition temperature (°C) |
|---|---|---|---|---|---|
| Example | 1 | 95 | 430 | 3.120 | -22.2 |
| | 2 | 91 | 390 | 3.100 | -48.7 |
| | 3 | 92 | 210 | 3.090 | -32.0 |
| | 4 | 90 | 235 | 3.010 | -13.3 |
| | 5 | 90 | 205 | 3.130 | -20.8 |
| Comparative Example | 1 | 25 | 120 | 1.540 | -22.2 |
| | 2 | Uncured | | | -22.2 |
| | 3 | Uncured | | | -22.2 |
| | 4 | Uncured | | | -22.2 |

Referring to Table 1 above, in Examples 1 to 5, as the photoinitiator and the thermal initiator are properly combined, and simultaneously the cationic initiator and the radical initiator are applied as the photoinitiator, the curing is quickly performed (fast curing) even at a relatively low temperature, so that it is possible to form a thick film having excellent curing characteristics. In addition, referring to Table 1 above, in Examples 1 to 5, as the acrylic component

comprising the acrylic polymer component having an appropriate glass transition temperature is included, it can be known that desired levels of adhesion force and hardness are secured.

Also, referring to Table 1 above, in Examples 1 to 5, as the content ratio of the acrylic component and the filler component is appropriately controlled, it can be known that an excellent level of thermal conductivity is secured, and the curing is quickly performed (fast curing) even at a relatively low temperature, whereby excellent curing characteristics are secured and simultaneously a desired level of excellent adhesion force is secured.

On the other hand, referring to Table 1 above, in Comparative Example 1, the acrylic component had a high content ratio, so that the curing was incomplete. Accordingly, it can be known that it has a relatively low hardness, the adhesion force is more lowered compared to Examples, and an excellent level of thermal conductivity is not secured because the content ratio of the acrylic component and the filler component is not properly controlled.

In addition, referring to Table 1 above, in Comparative Examples 2 to 4 in which the photoinitiator and the thermal initiator were not properly combined, the curing reaction was induced under the same conditions as those of Examples, but the curing was not completed. Specifically, the same conditions as those of Examples means conditions in which it is irradiated with UV (ultra violet) rays, and then left at about 50°C for 30 minutes, as described in the physical property measurement methods.

Although not shown in Table 1 above, the composition prepared according to Comparative Example 4 was left at about 50°C for 30 minutes without irradiation with UV rays, but the curing was not completed.

Although not shown in Table 1 above, when the composition prepared according to Comparative Example 4 was left at about 50°C for 60 minutes without irradiation with UV rays, the curing was completed at last. For the cured product, the adhesion force measured by referring to the adhesion force measurement method in the physical property measurement methods was about 180 gf/10mm. In addition, for the cured product, the thermal conductivity measured by referring to the thermal conductivity measurement method in the physical property measurement methods was about 3.050 W/mK.

In the case of Comparative Example 4, it can be known that some time is required until the curing is completed. That is, when the initiator combination method of the present application is not applied, it can be known that it is difficult to secure excellent curing characteristics by the quick curing at a relatively low temperature (fast curing).

[Explanation of Reference Numerals]

10: module case

10a: lower plate

10b: sidewall

10c: upper plate

10d: guiding part

20: battery cell

30: resin layer

50a: injection hole

50b: observation hole

40: insulating layer

100: pouch type cell

110: electrode assembly

120: exterior material

121: upper pouch

122: lower pouch

S: sealing part

## Claims

1. A curable composition comprising

   a resin component and a thermal initiator, wherein
   the thermal initiator has a 10-hour half-life temperature of 60°C or more, and
   exhibiting a Shore A hardness of 70 or more when maintained at 50°C for 50 minutes or less.

2. The curable composition according to claim 1, wherein the resin component comprises a polymer component containing a unit derived from a compound having a curable functional group.

3. The curable composition according to claim 2, wherein the curable functional group comprises one or more functional groups selected from the group consisting of an alkenyl group, an alkynyl group, a (meth)acrylate group, a carboxyl group, an amide group, an amino group, an epoxy group, an isocyanate group, a cyano group, an acid anhydride group, a mercapto group, a silanol group, an alkoxysilane group, a hydroxyl group and an oxazoline group.

4. The curable composition according to claim 2, wherein the polymer component comprises an acrylic polymer component, and
   the acrylic polymer component comprises a (meth)acrylate-derived unit containing an alkyl group and a (meth)acrylate-derived unit containing a hydroxyl group.

5. The curable composition according to claim 4, wherein the acrylic polymer component has a weight average molecular weight (Mw) in a range of 30,000 to 200,000 g/mol and a polydispersity index (PDI) in a range of 1 to 4.

6. The curable composition according to claim 2, wherein the resin component comprises a monomer component containing a compound having a curable functional group,

   the monomer component comprises an acrylic monomer component, and
   the acrylic monomer component comprises a (meth)acrylate containing an alkyl group and a (meth)acrylate containing a hydroxyl group.

7. The curable composition according to claim 1, wherein the resin component has a glass transition temperature (Tg) in a range of -50°C to 0°C.

8. The curable composition according to claim 1, further comprising a filler component, and
   forming a cured product having a thermal conductivity of 2 W/mK or more.

9. The curable composition according to claim 8, comprising the filler component in a range of 60 wt% to 98 wt% relative to the total weight.

10. The curable composition according to claim 1, further comprising a photoinitiator.

11. The curable composition according to claim 10, wherein the weight ratio ($I_H/I_U$) of the thermal initiator ($I_H$) to the photoinitiator (Iu) is in a range of 0.01 to 5.

12. The curable composition according to claim 10, wherein the photoinitiator comprises a radical initiator and a cationic initiator.

13. The curable composition according to claim 12, wherein the weight ratio ($I_R/I_P$) of the radical initiator ($I_R$) to the cationic initiator ($I_P$) is in a range of 0.01 to 2.

14. A curable composition comprising

a radical curable component and a cationic initiator, wherein
a cationic curable component is 1 wt% or less relative to the total weight, and
forming a cured product having a Shore A hardness of 70 or more.

**15.** The curable composition according to claim 14, wherein the radical curable component comprises an acrylic polymer component and an acrylic monomer component,

the acrylic polymer component comprises a (meth)acrylate-derived unit containing an alkyl group and a (meth)acrylate-derived unit containing a hydroxyl group, and
the acrylic monomer component comprises a (meth)acrylate containing an alkyl group and a (meth)acrylate containing a hydroxyl group.

**16.** The curable composition according to claim 14, further comprising a radical initiator as a photoinitiator.

**17.** The curable composition according to claim 14, further comprising a thermal initiator.

**18.** A battery module comprising a module case having a lower plate and sidewalls forming an inner space; a plurality of battery cells present in the inner space of the module case; and a resin layer present in the inner space of the module case, wherein

the resin layer contacts the plurality of battery cells, and contacts the lower plate or sidewall of the module case as well, and
the resin layer comprises the curable composition of claim 1, or a cured product of the curable composition of claim 13.

**19.** A battery pack comprising two or more battery modules of claim 18, wherein
the at least two or more battery modules are electrically connected to each other.

**20.** A device comprising the battery module of claim 18 or the battery pack of claim 19.

[Figure 1]

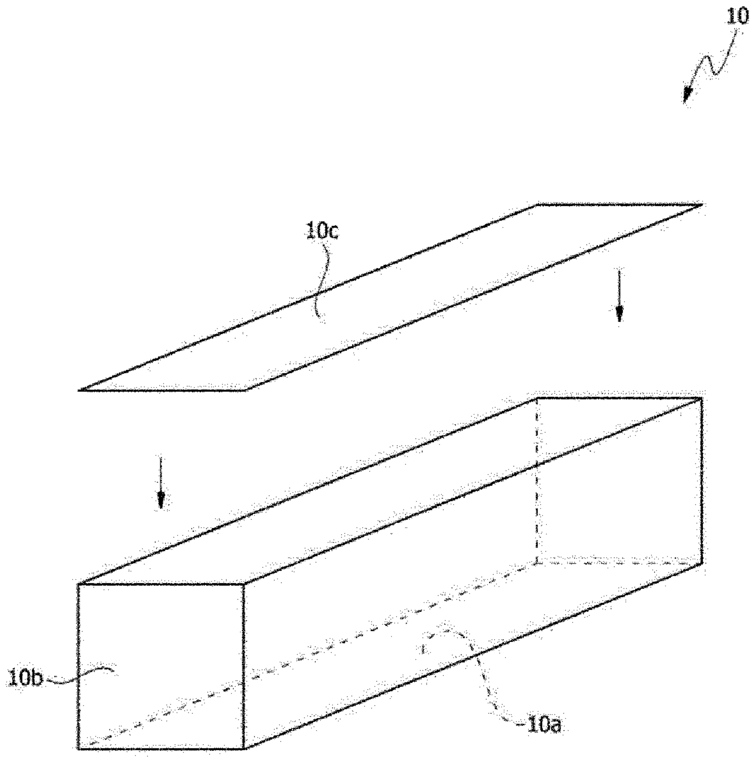

[Figure 2]

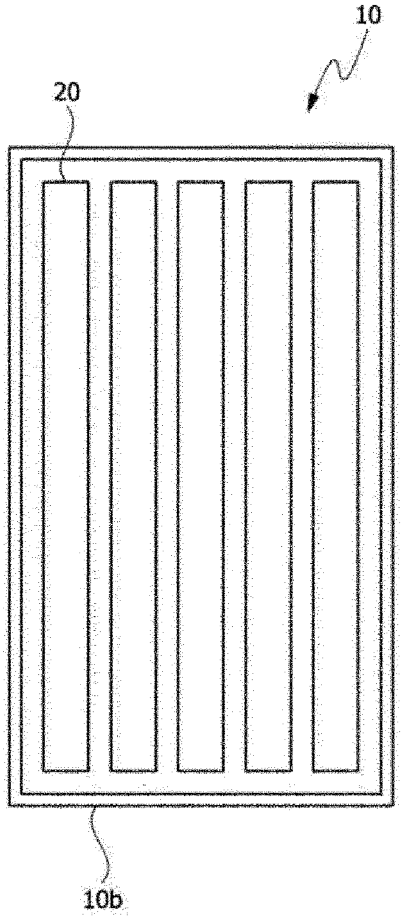

[Figure 3]

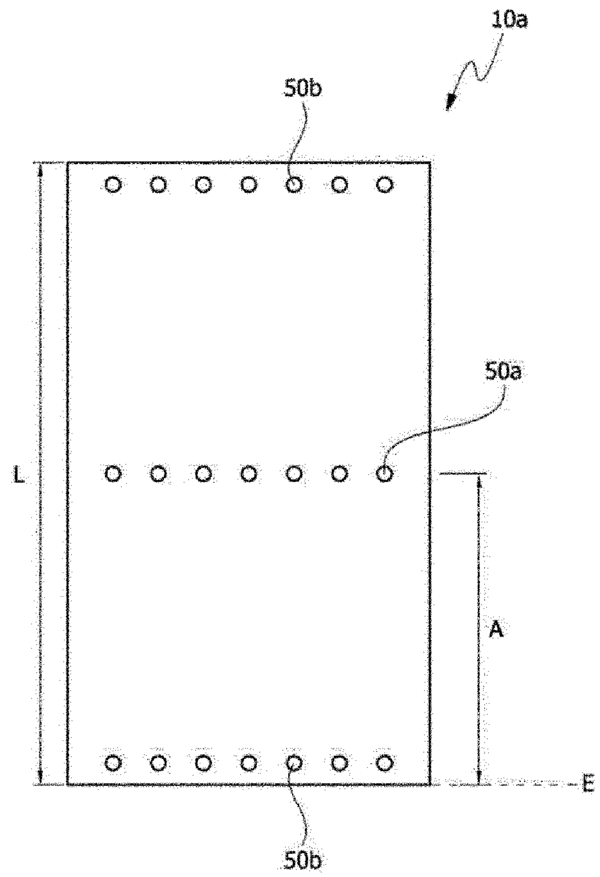

[Figure 4]

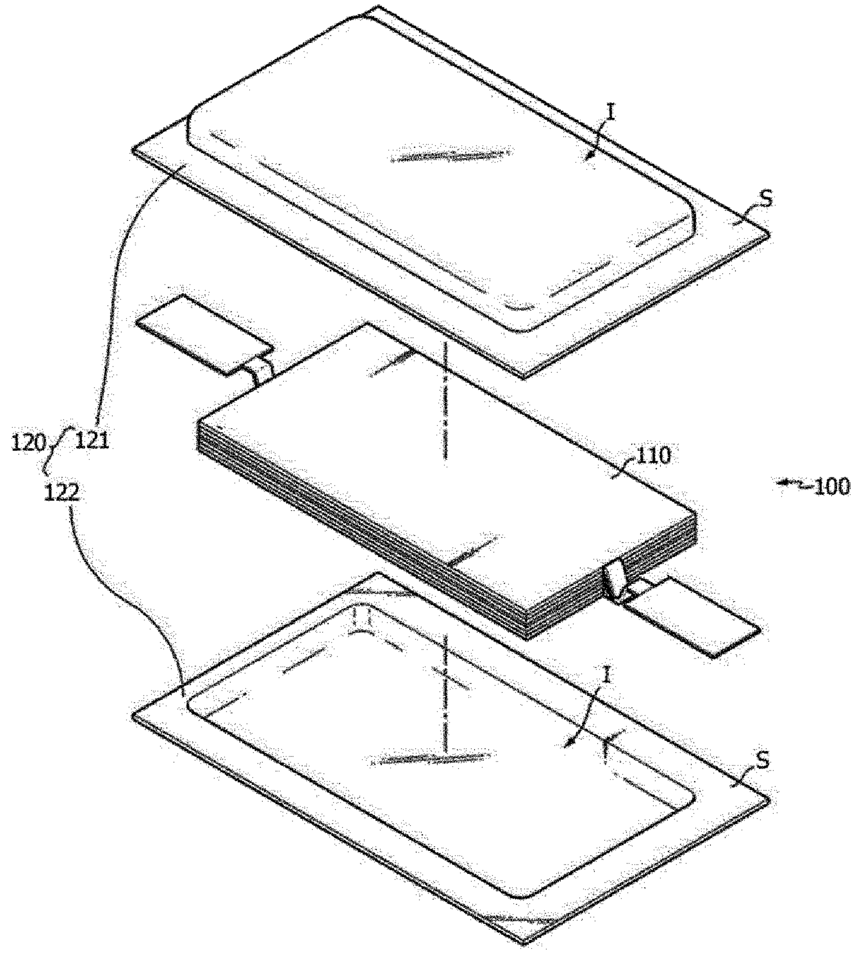

[Figure 5]

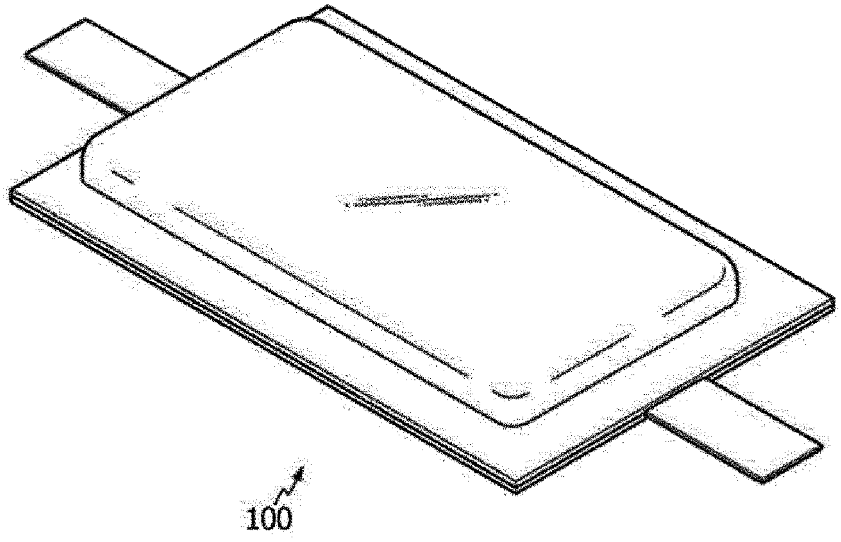


[Figure 6]

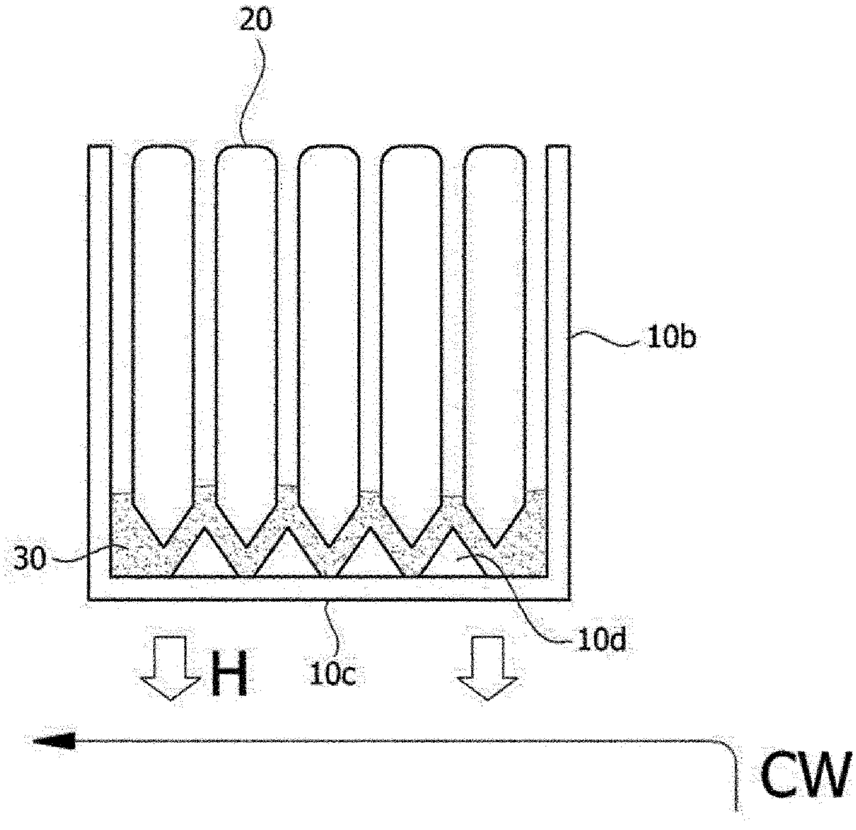

[Figure 7]

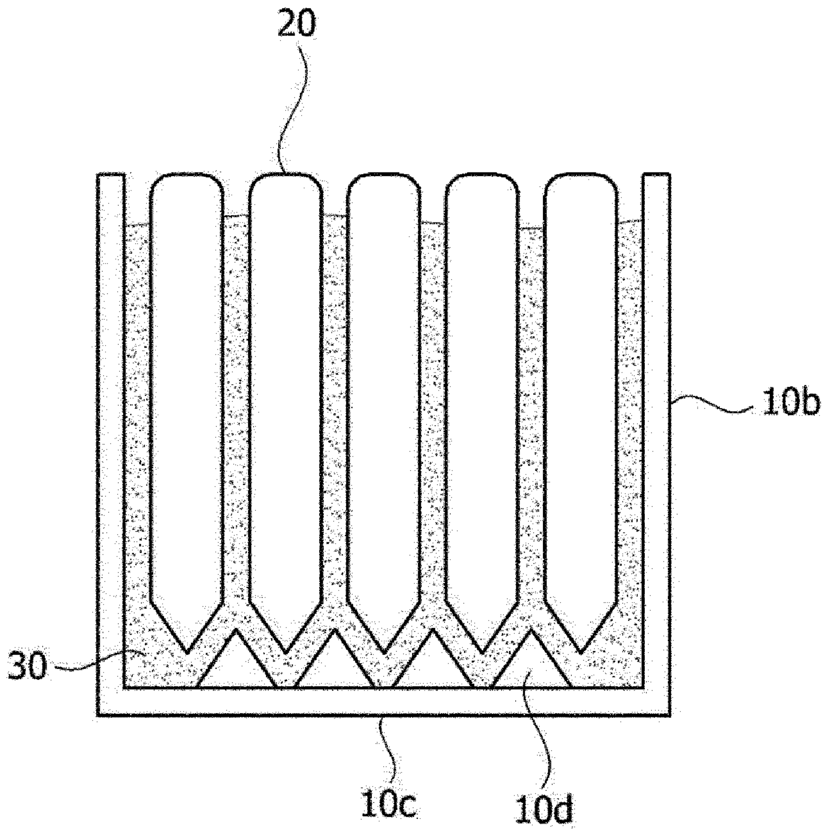

[Figure 8]

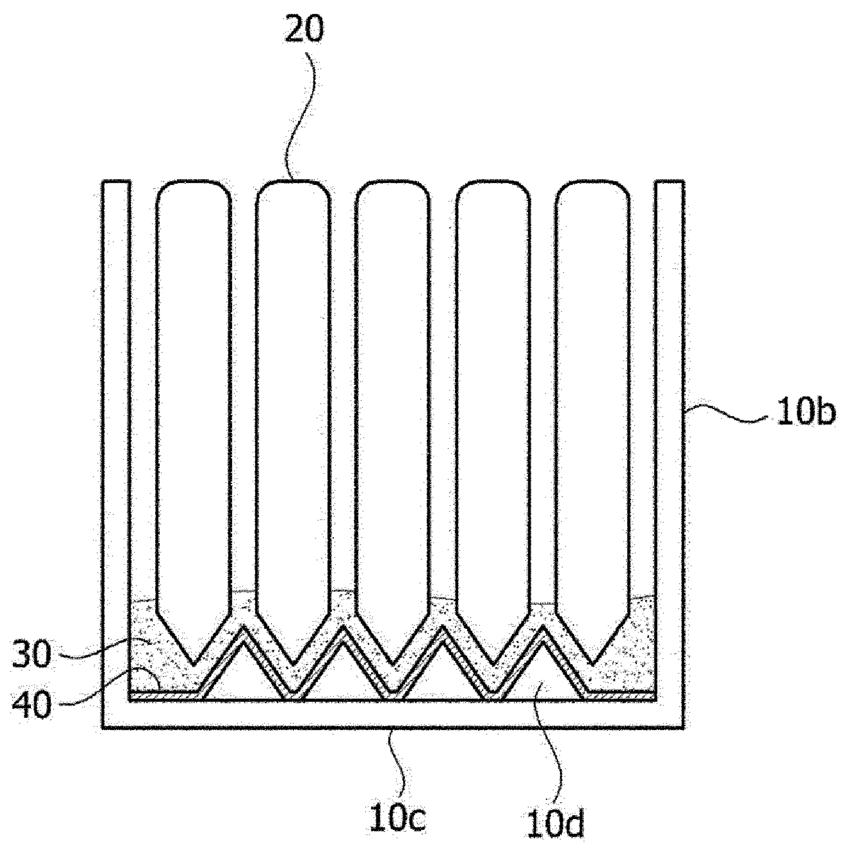

## INTERNATIONAL SEARCH REPORT

International application No.
**PCT/KR2022/015199**

**A. CLASSIFICATION OF SUBJECT MATTER**

**C08F 265/06**(2006.01)i; **C08F 220/28**(2006.01)i; **C08F 220/34**(2006.01)i; **C08F 2/44**(2006.01)i

According to International Patent Classification (IPC) or to both national classification and IPC

**B. FIELDS SEARCHED**

Minimum documentation searched (classification system followed by classification symbols)

C08F 265/06(2006.01); C07C 309/30(2006.01); C07C 327/58(2006.01); C08F 290/06(2006.01); C08G 18/42(2006.01); C08K 5/06(2006.01); C08K 5/13(2006.01); C09D 183/06(2006.01); C09D 4/00(2006.01); H01M 10/6551(2014.01); H01M 10/6554(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경화성(curable), 열개시제(thermal initiator), 광개시제(photoinitiator), 라디칼개시제(radical initiator), 양이온성 개시제(cationic initiator)

**C. DOCUMENTS CONSIDERED TO BE RELEVANT**

| Category* | Citation of document, with indication, where appropriate, of the relevant passages | Relevant to claim No. |
|---|---|---|
| Y | WO 2021-113430 A1 (PPG INDUSTRIES OHIO, INC.) 10 June 2021 (2021-06-10) See claims 1-12; and paragraphs [0027]-[0032]. | 1-19 |
| Y | KR 10-2016-0146587 A (LG CHEM, LTD.) 21 December 2016 (2016-12-21) See claims 1-14; paragraphs [0008]-[0084]; and table 1. | 1-19 |
| A | KR 10-1052766 B1 (KOLON INDUSTRIES, INC.) 29 July 2011 (2011-07-29) See entire document. | 1-19 |
| A | KR 10-2004-0094719 A (HENKEL CORPORATION) 10 November 2004 (2004-11-10) See entire document. | 1-19 |
| A | KR 10-2014-0006005 A (BASF SE) 15 January 2014 (2014-01-15) See entire document. | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2023** | **18 January 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/015199**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **20**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2022/015199**

| Patent document cited in search report | Publication date (day/month/year) | Patent family member(s) | Publication date (day/month/year) |
|---|---|---|---|
| WO 2021-113430 A1 | 10 June 2021 | CN 114787301 A | 22 July 2022 |
| | | EP 4069793 A1 | 12 October 2022 |
| | | KR 10-2022-0092957 A | 04 July 2022 |
| KR 10-2016-0146587 A | 21 December 2016 | CN 107735882 A | 23 February 2018 |
| | | CN 107735882 B | 09 October 2020 |
| | | EP 3300164 A1 | 28 March 2018 |
| | | EP 3300164 A4 | 10 April 2019 |
| | | JP 2018-522373 A | 09 August 2018 |
| | | JP 2019-021640 A | 07 February 2019 |
| | | JP 6421256 B2 | 07 November 2018 |
| | | JP 7063441 B2 | 09 May 2022 |
| | | KR 10-2006412 B1 | 02 August 2019 |
| | | US 11038223 B2 | 15 June 2021 |
| | | US 11424495 B2 | 23 August 2022 |
| | | US 2018-0183117 A1 | 28 June 2018 |
| | | US 2020-0274213 A1 | 27 August 2020 |
| | | WO 2016-200231 A1 | 15 December 2016 |
| KR 10-1052766 B1 | 29 July 2011 | KR 10-2006-0036611 A | 02 May 2006 |
| KR 10-2004-0094719 A | 10 November 2004 | CN 100643011 A | 20 July 2005 |
| | | EP 1478673 A2 | 24 November 2004 |
| | | JP 2005-518468 A | 23 June 2005 |
| | | US 6829362 B1 | 07 December 2004 |
| | | WO 03-072623 A2 | 04 September 2003 |
| | | WO 2003-072623 A3 | 05 February 2004 |
| KR 10-2014-0006005 A | 15 January 2014 | CN 103443072 A | 11 December 2013 |
| | | CN 103443072 B | 18 May 2016 |
| | | EP 2668156 A1 | 04 December 2013 |
| | | EP 2668156 B1 | 31 October 2018 |
| | | JP 2014-511400 A | 15 May 2014 |
| | | JP 2015-212309 A | 26 November 2015 |
| | | JP 5955339 B2 | 20 July 2016 |
| | | JP 6284511 B2 | 28 February 2018 |
| | | KR 10-1897842 B1 | 12 September 2018 |
| | | US 10241399 B2 | 26 March 2019 |
| | | US 2013-0308219 A1 | 21 November 2013 |
| | | US 2016-0060214 A1 | 03 March 2016 |
| | | US 2019-0171099 A1 | 06 June 2019 |
| | | US 9310677 B2 | 12 April 2016 |
| | | WO 2012-101245 A1 | 02 August 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210133570
- KR 1020160105354


### Non-patent literature cited in the description


- Polymer Handbook. John Wiley, 1999